# EUROPEAN PATENT APPLICATION

(11) **EP 3 862 955 A1**
(43) Date of publication of application: **11.08.2021**
(21) Application number: 21153700.6
(22) Date of filing: 27.01.2021
(51) Int. Cl.: G06Q 20/20, G07G 1/00, G07G 1/14

(54) **COMMODITY MANAGEMENT DEVICE AND METHOD**

(30) Priority: 06.02.2020 JP 2020018816
(71) Applicant: Toshiba Tec Kabushiki Kaisha, Shinagawa-ku Tokyo 141-8562 (JP)
(72) Inventor: Iwai, Toshiki, Shinagawa-ku, Tokyo 141-8562 (JP)
(74) Representative: Bandpay & Greuter

(57) **Abstract**

According to one embodiment, a commodity management device includes a first sensor configured to detect a movement of a commodity from a display region and a second sensor configured to detect a removal of a commodity from of the display region to outside of the display region by a person. A controller is configured to notify a designated notification destination when the movement of the commodity from the display region is detected by the first sensor but the removal of the commodity from the display region to outside the display region by a person has not been detected.

## Description

### FIELD

Embodiments described herein relate generally to a commodity management device and a control method thereof.

### BACKGROUND

In recent years, various store systems have been proposed that register the commodities being purchased by a customer by identifying items when picked up or otherwise selected by the customer while shopping. By registering commodities in this manner, commodity registration is not required at checkout counter or the like.

As one such store system, there is a store system in which any item removed from a store shelf by a customer is registered for purchase by the customer. By introducing such a store system, for example, in a convenience store, a small-scale store, and the like, it is possible to realize an unmanned store.

In such a store system, whenever the customer returns a commodity to the shelf, it is considered that the customer has returned a previous registered commodity to the shelf. Therefore, for example, if a customer kindly returns a commodity to the shelf that was dropped on the floor, the dropped commodity will be processed as if the dropped commodity being returned is actually one of the customer's previously registered items. Thus, an inconsistency occurs between the commodities intended to be purchased by the customer and the commodities recognized by the system as being registered for purchase by the customer. In order to avoid such problems, it becomes important to promptly notify the store manager or the like if a commodity is unexpectedly falls or is otherwise moved from its intended display place to prevent the above potential inconsistency from occurring.

### DESCRIPTION OF THE DRAWINGS

FIG. 1 is a schematic front view of a shelf used in a store system according to an embodiment.
FIG. 2 is a schematic view of the same shelf viewed from above.
FIG. 3 is a block diagram showing a schematic configuration of a store system.
FIG. 4 is a schematic diagram showing an example of a data structure of a commodity data file.
FIG. 5 is a schematic diagram showing an example of a data structure of a tracking file.
FIG. 6 is a schematic diagram showing an example of a data structure of a correlation table.
FIG. 7 is a schematic diagram showing an example of a data structure of a purchase list.
FIG. 8 is a block diagram showing a hardware configuration of a shelf control device.
FIG. 9 is a flowchart showing an operation procedure of a tracking processing unit.
FIG. 10 is a flowchart showing an operation procedure of a personal authentication processing unit.
FIG. 11 is a flowchart showing an operation procedure of a commodity monitoring processing unit.
FIG. 12 is a flowchart showing an operation procedure of an action monitoring processing unit.
FIG. 13 is a flowchart showing an operation procedure of an integrated processing unit to which an authentication notification command was input.
FIG. 14 is a flowchart showing an operation procedure of an integrated processing unit to which a hand-reaching notification command was input.
FIG. 15 is a flowchart showing an operation procedure of an integrated processing unit to which the hand-reaching notification command was input.
FIG. 16 is a flowchart showing a procedure of a purchase process.
FIG. 17 is a flowchart showing a procedure of a return process.
FIG. 18 is a flowchart showing the procedure of a return process.
FIG. 19 is a flowchart showing an operation procedure of an integrated processing unit to which an exit notification command was input.
FIG. 20 is a flowchart showing an operation procedure of a sales management device to which a purchase notification command was input.
FIG. 21 is a flowchart showing an operation procedure of a sales management device to which a return notification command was input.
FIG. 22 is a flowchart showing an operation procedure of a sales management device to which a settlement permission notification command was input.
FIG. 23 is a flowchart showing an operation procedure of an integrated processing unit to which a decrease notification command was input.

### DETAILED DESCRIPTION

The problem to be solved by the embodiment of the present disclosure is to provide a commodity management device that can appropriately take measures when a commodity is unexpectedly moved from a display place.

In general, according to one embodiment, a commodity management device comprises a first sensor configured to detect a movement of a commodity from a display region and a second sensor configured to detect a removal of a commodity from of the display region to outside of the display region by a person. A controller is configured to notify a designated notification destination when the movement of the commodity from the display region is detected by the first sensor but the removal of the commodity from the display region to outside the display region by a person has not been detected.

Preferably, the notification destination is a notification device near the display region where the movement of the commodity was detected by the first sensor.

Preferably, the notification destination is a notification device in a waiting place of a commodity manager away from the display region.

Preferably, the notification destination is a first notification device near the display region where the movement of the commodity was detected by the first sensor and a second notification device in a waiting place of a commodity manager away from the display region.

Preferably, the controller is further configured to check whether a person is near the display region when the movement of the commodity is detected, send a notification to the first notification device if a person is near the display region, and the first notification device is configured to output a message, upon receiving the notification, that the commodity should not be touched.

Preferably, the first notification device is a speaker.

Preferably, the first notification device is a display screen.

Preferably, the first sensor is a weight scale configured to weigh changes in weight of items on the display region.

Preferably, the second sensor comprises a camera.

Preferably, the second sensor comprises a time of flight camera.

Preferably, the display region is a portion of a display shelf.

Preferably, the notification destination is a speaker proximate to the display region.

There is also provided a commodity management system, comprising a notification device and the above-mentioned commodity management device configured as a display shelf having a display region on which a commodity is to be displayed.

There is also provided a commodity management method, comprising: detecting a movement of a commodity from a display region based on output from a first sensor; detecting a removal of a commodity from of the display region to outside of the display region by a person based on output of a second sensor; and notifying a designated notification destination when the movement of the commodity from the display region is detected but the removal of the commodity from the display region to outside the display region by a person has not been detected.

Preferably, the notification destination is a speaker configured to output a voice message.

Hereinafter, an embodiment of a commodity management device will be described with reference to the drawings.

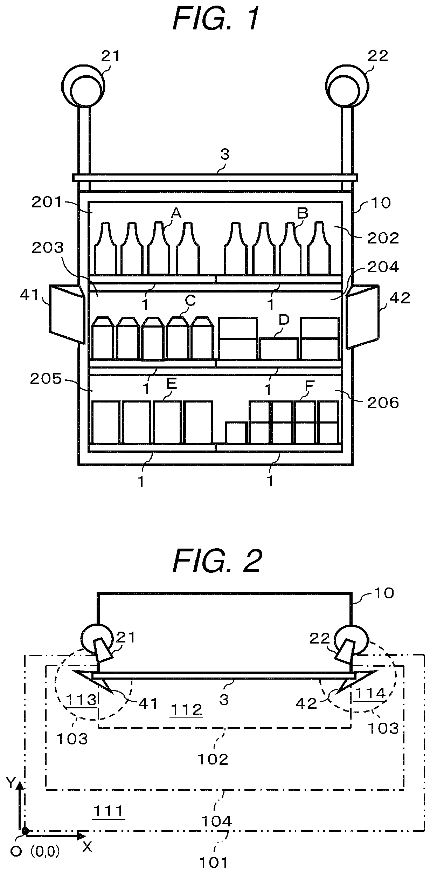

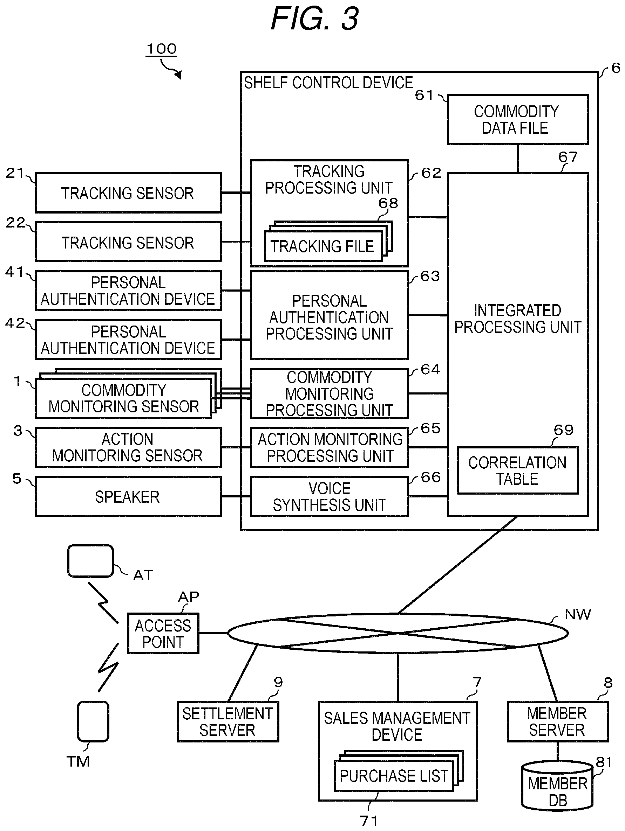

The present embodiment uses as an example a commodity management device of a store system 100 (see FIG. 3) that automatically registers a commodity purchased by a customer (consumer) by using a technology that identifies a person near a shelf 10 (see FIGS. 1 and 2) that removes the commodity from the shelf 10 as the purchaser of the commodity.

The commodity management device of the present embodiment can be utilized for appropriately dealing with a case where a commodity is unexpectedly removed from the display place. In this context, an unexpected movement of a commodity includes a case where a commodity falls from the shelf 10 due to wind, an earthquake, or the like, and a case where a commodity is accidentally bumped from its display place due to the actions of a consumer in removing or returning another item..

First, the shelf 10 used in the store system 100 will be described with reference to FIGS. 1 and 2.

FIG. 1 is a schematic view of the shelf 10 viewed from the front and FIG. 2 is a schematic view of the shelf 10 viewed from above. As shown in FIG. 1, the shelf 10 is a three-level shelf partitioned by two shelf plates in the vertical direction. In this example, two kinds of commodities are displayed on each of the stages in different sections. As an example, a commodity A and a commodity B are displayed side by side on the upper stage, a commodity C and a commodity D are displayed side by side on the middle stage, and a commodity E and a commodity F are displayed side by side on the lower stage.

Hereinafter, the upper left section where the commodity A is displayed is referred to as a section 201, the upper right section where the commodity B is displayed is referred to as a section 202, the middle left section where the commodity C is displayed is referred to as a section 203, the middle right section where the commodity D is displayed is referred to as a section 204, the lower left section where the commodity E is displayed is referred to as a section 205, and the lower right section where the commodity F is displayed is referred to as a section 206.

The commodity monitoring sensor 1 is attached to each of the sections 201 to 206 on each stage. The commodity monitoring sensor 1 is a sensor for monitoring an increase or decrease in weight due to the movement of a commodity. In the embodiment, a weight sensor capable of measuring the total weight of the commodities displayed in the corresponding sections 201 to 206 is used as the commodity monitoring sensor 1.

As shown in FIGS. 1 and 2, two tracking sensors 21 and 22 and one action monitoring sensor 3 are attached to the upper part of the shelf 10. The tracking sensors 21 and 22 are separately attached to the left side and the right side of the shelf 10. The action monitoring sensor 3 is attached on the front side of the shelf 10 along the width direction of the shelf 10 substantially parallel to the floor surface.

The tracking sensors 21 and 22 are sensors for tracking the movement of the consumer in a rectangular area 111 surrounded by a first boundary line virtually drawn by the two-dot chain line in FIG. 2. Hereinafter, the area 111 will be referred to as a tracking area 111. In the present embodiment, camera sensors such as an RGB camera, an IR camera, and an infrared camera capable of photographing the inside of the tracking area 111 are used as the tracking sensors 21 and 22. The number of tracking sensors 21 and 22 is not limited to two.

The action monitoring sensor 3 is a sensor for monitoring the action of the consumer in a rectangular area 112 with respect to the shelf 10 surrounded by a second boundary line 102 virtually drawn by a broken line in FIG. 2. Specifically, the action monitoring sensor 3 monitors the action of the consumer in the area 112 reaching out their hand to the shelf 10 and the action of withdrawing the hand. Hereinafter, the action of reaching out a hand is referred to as a hand-reaching action and the action of withdrawing the hand is referred to as a hand-return action. The area 112 is an area estimated to be located when the consumer takes out the commodities A to F from the shelf 10. Below, the area 112 is referred to as a purchase area 112. The purchase area 112 is inside the tracking area 111. In the embodiment, a time of flight (TOF) sensor, a laser radar, or the like is used as the action monitoring sensor 3. The number of action monitoring sensors 3 is not limited to one.

As shown in FIGS. 1 and 2, personal authentication devices 41 and 42 are attached to both sides of the shelf 10. The personal authentication devices 41 and 42 are devices for personally authenticating a consumer. Consumers who use the store perform member registration in advance. The member registration is possible by installing a dedicated application program on a user terminal TM (see FIG. 3) such as a smartphone or a tablet terminal. By performing the member registration, a member ID unique to the consumer is set in the user terminal TM. Hereinafter, the application program is referred to as a shopping application. When the shopping application is activated in the user terminal TM with the member ID set, a code representing the member ID is displayed on the display of the user terminal TM. The code is represented by, for example, a barcode system or a two-dimensional code system. The personal authentication devices 41 and 42 include a reader for reading the code. The number of personal authentication devices 41 and 42 is not limited to two. The installation locations of the personal authentication devices 41 and 42 are not limited to both sides of the shelf 10.

Circular areas 113 and 114 surrounded by a third boundary line 103 virtually drawn by a broken line in FIG. 2 are areas where the consumer is supposed to enter and stand to cause the member ID code displayed on the display of the user terminal TM to be read with the readers of the personal authentication devices 41 and 42. Hereinafter, the areas 113 and 114 are referred to as authentication areas 113 and 114. The authentication areas 113 and 114 are inside the tracking area 111.

A fourth boundary line 104 is set between the first boundary line 101 and the second boundary line 102. In FIG. 2, the fourth boundary line 104 is virtually drawn by an alternate long and short dash line. The store system 100 starts tracking when a consumer enters the tracking area 111. Then, when the consumer enters from the outside of the fourth boundary line 104 to the inside thereof, the store system 100 sets a tracking ID to the consumer. Then, when the consumer moves from the inside of the fourth boundary line 104 to the outside thereof and further to the outside of the first boundary line 101, the store system 100 ends the tracking of the consumer.

The first to fourth boundary lines 101 to 104 may not be linear but may be band-shaped with a predetermined width. The tracking area 111 and the purchase area 112 may be areas having a shape other than a rectangle. The authentication areas 113 and 114 may be areas having a shape other than a circle.

The shelf 10 is an example of a commodity display place. The number of stages in the shelf 10 and the number of commodities displayed on each stage are arbitrary. In short, it is sufficient that there is a plurality of sections in which the commodities can be displayed according to commodity types, and a commodity monitoring sensor 1 can be separately provided for each of the sections. Therefore, the display place is not limited to the shelf but may be a display stand, a display case, a display space, or the like.

The tracking sensors 21 and 22, the action monitoring sensor 3, and the personal authentication devices 41 and 42 do not necessarily have to be provided on the shelf 10. For example, the tracking sensors 21 and 22 or the action monitoring sensor 3 may be provided on the ceiling or the like of the store. The tracking sensors 21 and 22 only need to be provided in a location where the movement of the consumer in the tracking area 111 can be tracked. The action monitoring sensor 3 only needs to be provided at a location where the action of the consumer in the purchase area 112 with respect to the shelf 10 can be monitored. The personal authentication devices 41 and 42 may be provided near the entrance of the store, for example.

Next, the configuration of the store system 100 will be described with reference to FIGS. 3 to 8.

FIG. 3 is a block diagram showing aspects of the store system 100. The store system 100 includes a shelf control device 6, a sales management device 7, a member server 8, and a settlement server 9. The store system 100 mutually connects the shelf control device 6, the sales management device 7, the member server 8, and the settlement server 9 by a communication network NW such as a local area network (LAN) .

The store system 100 can perform wireless communication with the user terminal TM and a monitoring terminal AT via an access point AP of the communication network NW. The user terminal TM is a terminal carried by a consumer. For example, a smartphone, a tablet terminal, or the like can be the user terminal TM. The monitoring terminal AT is a terminal installed in a waiting place of a commodity manager so that the commodity manager monitors the situation inside the store. For example, a personal computer, a tablet terminal, or the like can be the monitoring terminal AT. The commodity manager is an employee who is in charge of managing the commodities displayed on the shelf 10.

The member server 8 manages a member database 81 for storing information related to consumers who are registered as members. The member database 81 stores the name of each consumer, the terminal information of the user terminal TM carried by the consumer, the information related to the settlement registered by the consumer, the valid flag, and the like in correlation with the member ID of each consumer. The terminal information includes information such as a communication address necessary to communicate with the user terminal TM via the communication network NW. The information related to the settlement includes information necessary for card settlement using a credit card, an electronic money card, or the like, or electronic settlement using a barcode, a two-dimensional code, or the like. The valid flag is 1-bit data for identifying whether the member ID is valid. In the present embodiment, the valid flag of the valid member ID is "1" and the valid flag of the invalid member ID is "0". For example, the valid flag correlated with the member ID of the consumer who lost the qualification of the member is "0".

The settlement server 9 is a server for performing settlement processing such as the card settlement and the electronic settlement described above. The settlement server 9 may be connected to a point of sales (POS) terminal and perform settlement processing via the POS terminal. Well-known processing can be applied as the settlement processing. Therefore, the detailed description thereof will be omitted.

The shelf control device 6 includes a function as a commodity monitoring device. The shelf control device 6 has a commodity data file 61.

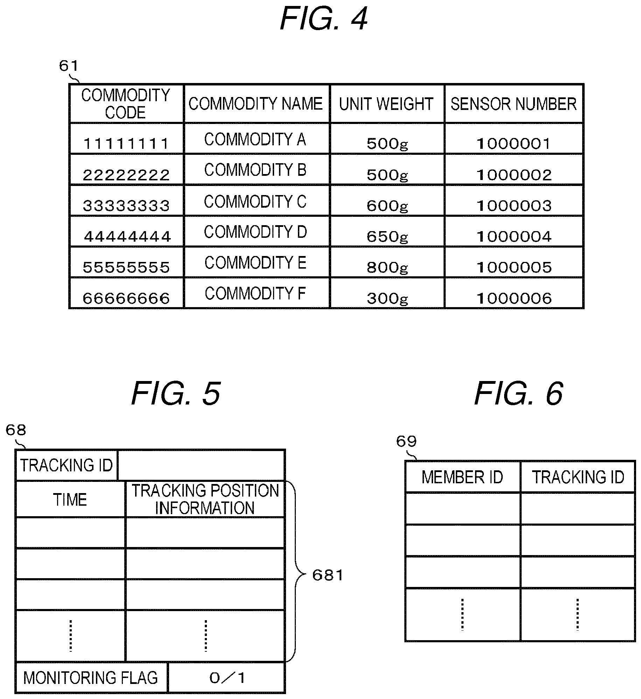

The commodity data file 61 stores data related to each of the commodities A to F displayed on the shelf 10. An example of the data structure of the commodity data file 61 is shown in FIG. 4. As illustrated, the commodity data file 61 stores the commodity name, the unit weight, and the sensor number in correlation with the commodity codes of the commodities A to F. The unit weight is the weight per commodity. The sensor number is a number for identifying the commodity monitoring sensor 1 provided in each of the sections 201 to 206 of the shelf 10 on which the corresponding commodity is displayed. A unique sensor number is assigned to each commodity monitoring sensor 1. The data stored in the commodity data file 61 is not limited to the items described above. Data on other items may be stored in the commodity data file 61.

The shelf control device 6 has functions as a tracking processing unit 62, a personal authentication processing unit 63, a commodity monitoring processing unit 64, an action monitoring processing unit 65, a voice synthesis unit 66, and an integrated processing unit 67.

The tracking processing unit 62 takes in image data from the tracking sensors 21 and 22. The tracking processing unit 62 analyzes the image data and tracks the movement of the consumer in the tracking area 111. The tracking processing unit 62 stores the movement data in a tracking file 68 for each consumer.

An example of the data structure of the tracking file 68 is shown in FIG. 5. As illustrated, the tracking file 68 includes a tracking ID area, a movement data 681 area, and a monitoring flag area. The tracking ID is a unique code set by the tracking processing unit 62 to identify the consumer to be tracked. The movement data 681 is a time-series description of tracking position information indicating the location of the tracking target consumer and the time at the time point. The tracking position information is represented, for example, in FIG. 2, by X-Y plane coordinates in which the point at the lower left corner of the tracking area 111 is the origin O (0,0). The monitoring flag is 1-bit data for identifying whether the tracking target consumer moved from the inside of the fourth boundary line 104 to the outside thereof. In the present embodiment, the monitoring flag stored in the tracking file 68 of the consumer who moved from the inside of the fourth boundary line 104 to the outside thereof is set to "1" and the monitoring flag stored in the other tracking files 68 is set to "0".

The personal authentication processing unit 63 takes in the data read by the readers of the personal authentication devices 41 and 42 and performs processing related to personal authentication of the consumer. The personal authentication processing unit 63 cooperates with the integrated processing unit 67 to perform processing related to personal authentication. The personal authentication processing unit 63 outputs the authentication result to the personal authentication devices 41 and 42. The personal authentication devices 41 and 42 have a function of notifying the authentication result. For example, the personal authentication devices 41 and 42 include a display device and display the authentication result on the display device.

The commodity monitoring processing unit 64 takes in weight data from the commodity monitoring sensor 1. The commodity monitoring processing unit 64 monitors the states of the commodities A to F displayed on the shelf 10 based on the weight data. Specifically, when the weight data from the commodity monitoring sensor 1 decreases, the commodity monitoring processing unit 64 recognizes that the commodity is taken out from the section where the commodity monitoring sensor 1 is provided. When the weight data from the commodity monitoring sensor 1 increases, the commodity monitoring processing unit 64 recognizes that the commodity is placed in the section where the commodity monitoring sensor 1 is provided. The recognition result of the commodity monitoring processing unit 64 is given to the integrated processing unit 67.

The action monitoring processing unit 65 takes in an output signal from the action monitoring sensor 3. The action monitoring processing unit 65 monitors the action of a purchaser in the purchase area 112 with regard to the shelf 10 based on the output signal. Specifically, the action monitoring processing unit 65 recognizes as a hand-reaching action when the consumer's hand inserted into the shelf 10 is detected by the action monitoring sensor 3 and recognizes as a hand-return action when the hand is no longer detected. The recognition result of the action monitoring processing unit 65 is given to the integrated processing unit 67. Here, the action position information of the point where the action monitoring sensor 3 detected the hand is also given to the integrated processing unit 67. The action position information is represented by an X coordinate indicating the distance from the origin O of the above-mentioned X-Y plane coordinates and a Z coordinate indicating the height from the floor surface.

The voice synthesis unit 66 is connected to a speaker 5. The voice synthesis unit 66 synthesizes voice data under the control of the integrated processing unit 67 and outputs the voice data to the speaker 5. As a result, the speaker 5 emits a voice. The speaker 5 is installed near the shelf 10. The speaker 5 may be installed, for example, in a waiting place for a store clerk. Alternatively, the speaker 5 may be built in a terminal carried by a store clerk, and the voice synthesized by the voice synthesis unit 66 may be emitted from the speaker 5. Here, the voice data synthesized by the voice synthesis unit 66 is transmitted to an access point AP via the communication network NW and further to a portable terminal of a store clerk via wireless communication.

The integrated processing unit 67 cooperates with the commodity data file 61, the tracking processing unit 62, the personal authentication processing unit 63, the commodity monitoring processing unit 64, the action monitoring processing unit 65, and the voice synthesis unit 66 to perform data processing required for the store system 100. As one type of data processing, there is a process of correlating the consumer who was successfully authenticated by the personal authentication processing unit 63 with the consumer whose movement is tracked by the tracking processing unit 62. As a data table used in the process, the integrated processing unit 67 has a correlation table 69.

An example of the data structure of the correlation table 69 is shown in FIG. 6. As illustrated, the correlation table 69 includes an area for storing the member ID of the consumer and the tracking ID set for the consumer in correlation with each other.

One type of data processing executed by the integrated processing unit 67 is a process of identifying the action of the consumer with respect to a commodity based on the tracking result of the tracking processing unit 62 and the monitoring result of the action monitoring processing unit 65. The integrated processing unit 67 outputs a purchase notification command or a return notification command to the sales management device 7 based on the action of the consumer identified in the process. The purchase notification command and the return notification command will be clarified in the operation description below.

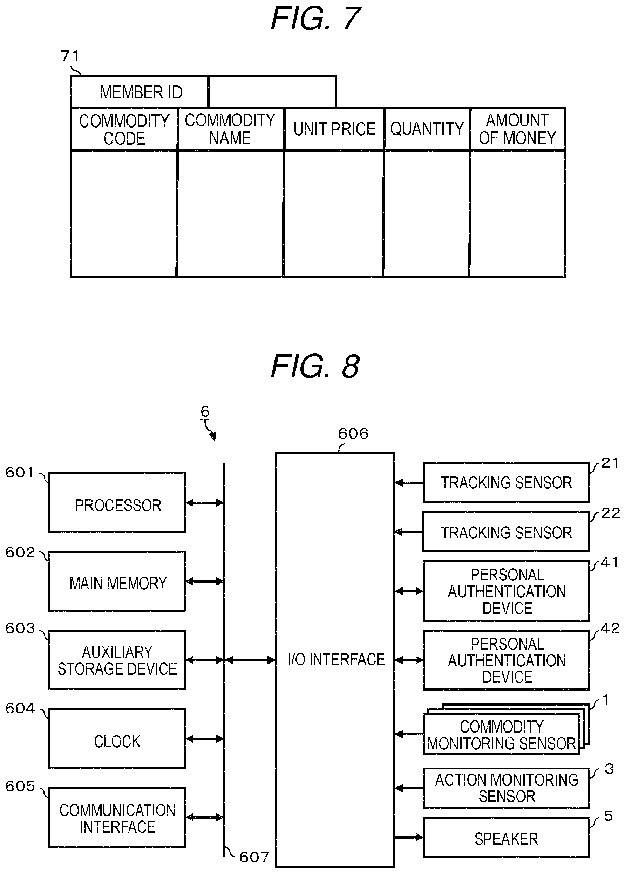

The sales management device 7 includes a purchase list 71. The purchase list 71 is created for each consumer. FIG. 7 shows an example of the data structure of the purchase list 71. As illustrated, the purchase list 71 stores the purchased commodity data of the consumer in correlation with the member ID of the consumer. The purchased commodity data includes items such as the commodity code, the commodity name, the unit price, the quantity, and the amount of money. The amount of money is calculated by multiplying the unit price by the quantity. The purchased commodity data may include items other than the above items.

Upon receiving the purchase notification command, the sales management device 7 registers the purchased commodity data in the purchase list 71. Upon receiving the return notification command, the sales management device 7 corrects the corresponding purchased commodity data.

FIG. 8 is a block diagram showing a hardware configuration of the shelf control device 6. The shelf control device 6 includes a processor 601, a main memory 602, an auxiliary storage device 603, a clock 604, a communication interface 605, an I/O interface 606, and a system transmission line 607. The processor 601, the main memory 602, the auxiliary storage device 603, the clock 604, the communication interface 605, and the I/O interface 606 are each connected to the system transmission line 607. The system transmission line 607 includes an address bus, a data bus, a control signal line, and the like. In the shelf control device 6, the processor 601, the main memory 602, and the auxiliary storage device 603 are connected to each other by the system transmission line 607 form a computer for controlling the shelf control device 6.

The processor 601 controls each unit to realize various functions as the shelf control device 6 according to an operating system or an application program. The processor 601 is, for example, a central processing unit (CPU).

The main memory 602 includes a non-volatile memory area and a volatile memory area. The main memory 602 stores an operating system or application program in the non-volatile memory area. The main memory 602 stores data necessary for the processor 601 to execute processes for controlling each unit, in the volatile memory area. The main memory 602 uses the volatile memory area as a work area in which data is appropriately rewritten by the processor 601. The non-volatile memory area is, for example, a read only memory (ROM). The volatile memory area is, for example, a random access memory (RAM).

The auxiliary storage device 603 corresponds to the auxiliary storage part of the computer. As the auxiliary storage device 603, known storage devices such as an electric erasable programmable read-only memory (EEPROM), a hard disc drive (HDD), or a solid-state drive (SSD) are used alone or in combination. The auxiliary storage device 603 stores data used by the processor 601 for performing various kinds of processing and data generated by the processing of the processor 601. The auxiliary storage device 603 may store an application program.

The main memory 602 or the auxiliary storage device 603 can be used for storing the tracking file 68, the correlation table 69, and the commodity data file 61.

The clock 604 functions as a time information source of the shelf control device 6. The processor 601 tracks the current date and time based on the time information tracked by the clock 604.

The communication interface 605 is a circuit for performing data communication with other devices connected via the communication network NW. Other devices include the sales management device 7, the member server 8, the settlement server 9, and the like.

The I/O interface 606 is a circuit for exchanging data signals with the commodity monitoring sensor 1, the tracking sensors 21 and 22, the action monitoring sensor 3, the personal authentication devices 41 and 42, and the speaker 5 described above.

The shelf control device 6 having such a configuration is provided, for example, on the upper surface or the back surface of the shelf 10. The shelf control device 6 is connected to the communication network NW by wired communication or wireless communication.

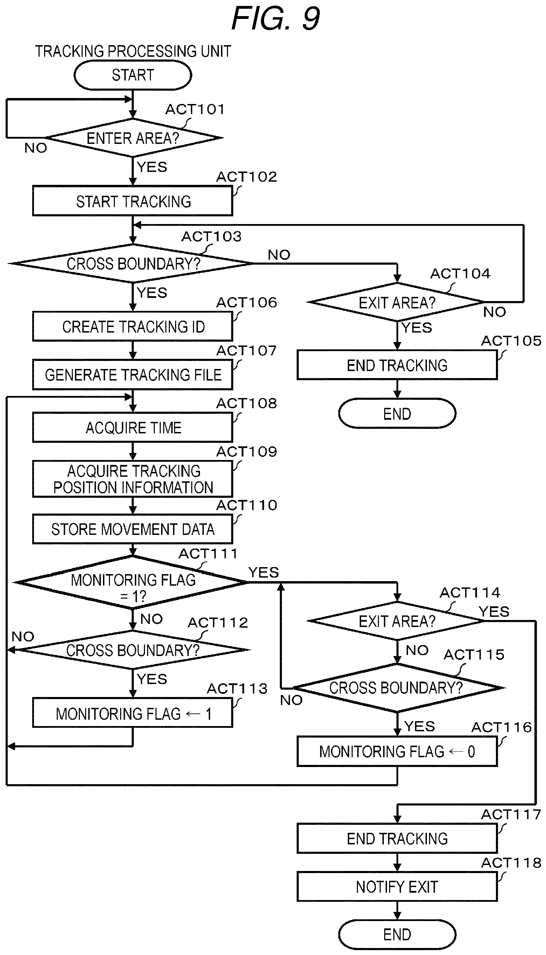

The computer including the processor 601 performs data processing according to a control program installed in the main memory 602 or the auxiliary storage device 603, thereby realizing the described functions of the tracking processing unit 62, the personal authentication processing unit 63, the commodity monitoring processing unit 64, the action monitoring processing unit 65, the voice synthesis unit 66, and the integrated processing unit 67. Next, with reference to the flowcharts shown in FIGS. 9 to 24, the operations of the tracking processing unit 62, the personal authentication processing unit 63, the commodity monitoring processing unit 64, the action monitoring processing unit 65, the voice synthesis unit 66, and the integrated processing unit 67 will be described. The function of each unit will be clarified by the operation descriptions. The following description is an example. The procedure and the like are not particularly limited as long as similar results are obtained.

Incidentally, the method of installing the control program in the main memory 602 or the auxiliary storage device 603 is not particularly limited. The control program can be installed in the main memory 602 or the auxiliary storage device 603 by recording the control program on a removable recording medium or by distributing the control program by communication via a network. The recording medium may have any form as long as the recording medium can store the program and can be read by the device, such as a CD-ROM or a memory card.

First, the operation of the tracking processing unit 62 will be described with reference to FIG. 9.

As ACT 101, the tracking processing unit 62 waits for a person to cross the first boundary line 101 to enter the tracking area 111. Incidentally, as the person who enters the tracking area 111, not only the consumer but also a store-related person such as a store clerk can be considered. However, here, for convenience of explanation, the person is limited to the consumer. Therefore, hereinafter, the person is referred to as a consumer.

When the tracking processing unit 62 detects that the consumer entered the tracking area 111 based on the image data captured from the tracking sensors 21 and 22, the tracking processing unit 62 determines YES in ACT 101 and proceeds to ACT 102. The tracking processing unit 62 starts tracking the consumer, as ACT 102. Hereinafter, the tracked consumer will be referred to as a consumer SA.

As ACT 103, the tracking processing unit 62 checks whether the consumer SA crossed the fourth boundary line 104 and entered the tracking area 111 inside the fourth boundary line 104. When the consumer SA did not enter the tracking area 111 inside the fourth boundary line 104, the tracking processing unit 62 determines NO in ACT 103 and proceeds to ACT 104. As ACT 104, the tracking processing unit 62 checks whether the consumer SA crossed the first boundary line 101 and left the tracking area 111. If the consumer SA did not leave the tracking area 111, the tracking processing unit 62 determines NO in ACT 104 and returns to ACT 103. Here, in ACT 103 and ACT 104, the tracking processing unit 62 waits for the consumer SA to enter the tracking area 111 inside the fourth boundary line 104 or leave the tracking area 111.

When the consumer SA left the tracking area 111 without entering the tracking area 111 inside the fourth boundary line 104 in the standby state of ACT 103 and ACT 104, the tracking processing unit 62 determines YES in ACT 104 and proceeds to ACT 105. The tracking processing unit 62 ends the tracking of the consumer SA, as ACT 105. Then, the tracking processing unit 62 ends the operation of the procedure shown in the flowchart of FIG. 9.

When the consumer SA enters the tracking area 111 inside the fourth boundary line 104 in the standby state of ACT 103 and ACT 104, the tracking processing unit 62 determines YES in ACT 103 and proceeds to ACT 106. The tracking processing unit 62 assigns a unique tracking ID to the consumer SA, as ACT 106. Then, the tracking processing unit 62 generates the tracking file 68 in which the tracking ID was described, as ACT 107. Here, the tracking processing unit 62 sets the monitoring flag to "0". Below, the tracking file 68 in which the tracking ID of the consumer SA was described is referred to as a tracking file 680.

The tracking processing unit 62 acquires the time tracked by the clock 604, as ACT 108. The tracking processing unit 62 acquires the current tracking position information of the consumer SA, as ACT 109. The tracking processing unit 62 stores in the tracking file 680 the movement data in which the time is correlated with the tracking position information, as ACT 110.

The tracking processing unit 62 checks the monitoring flag of the tracking file 680, as ACT 111. Here, the monitoring flag is "0". Therefore, the tracking processing unit 62 determines NO in ACT 111 and proceeds to ACT 112. The tracking processing unit 62 checks whether the consumer SA crossed the fourth boundary line 104 and left to the tracking area 111 outside the fourth boundary line 104, as ACT 112. When the consumer SA did not leave to the tracking area 111 outside the fourth boundary line 104, the tracking processing unit 62 determines NO in ACT 112 and returns to ACT 108. Then, the tracking processing unit 62 executes the processes after ACT 108 in the same manner as described above. That is, the tracking processing unit 62 stores in the tracking file 680 movement data including the time tracked by the clock 604 and the tracking position information of the consumer SA at that time.

The tracking processing unit 62 repeatedly executes the process of storing the movement data in the tracking file 680 until the consumer SA leaves to the tracking area 111 outside the fourth boundary line 104. Then, when the consumer SA leaves to the tracking area 111 outside the fourth boundary line 104, the tracking processing unit 62 determines YES in ACT 112 and proceeds to ACT 113. The tracking processing unit 62 changes the monitoring flag of the tracking file 680 to "1", as ACT 113. Then, the tracking processing unit 62 returns to ACT 108 and executes the processes after ACT 108 again. Here, the monitoring flag is "1". Therefore, the tracking processing unit 62 determines YES in ACT 111 and proceeds to ACT 114.

The tracking processing unit 62 checks whether the consumer SA left the tracking area 111, as ACT 114. When the consumer SA did not leave the tracking area 111, the tracking processing unit 62 determines NO in ACT 114 and proceeds to ACT 115. The tracking processing unit 62 checks whether the consumer SA crossed the fourth boundary line 104 again and returned to the tracking area 111 inside the fourth boundary line 104, as ACT 115. When the consumer SA did not return to the tracking area 111 inside the fourth boundary line 104, the tracking processing unit 62 determines NO in ACT 115 and returns to ACT 114. Here, the tracking processing unit 62 waits for the consumer SA to leave the tracking area 111 or return to the tracking area 111 inside the fourth boundary line 104 in ACT 114 and ACT 115.

When the consumer SA returned to the tracking area 111 inside the fourth boundary line 104 in the standby state of ACT 114 and ACT 115, the tracking processing unit 62 determines YES in ACT 115 and proceeds to ACT 116. The tracking processing unit 62 changes the monitoring flag of the tracking file 680 to "0", as ACT 116. Then, the tracking processing unit 62 returns to the process of ACT 108. Therefore, the tracking processing unit 62 repeatedly executes the processes of ACT 108 to ACT 112 until the consumer SA leaves to the tracking area 111 outside the fourth boundary line 104 again.

When the consumer SA leaves the tracking area 111 in the standby state of ACT 114 and ACT 115, the tracking processing unit 62 determines YES in ACT 114 and proceeds to ACT 117. The tracking processing unit 62 ends the tracking of the consumer SA, as ACT 117. The tracking processing unit 62 outputs an exit notification command to the integrated processing unit 67, as ACT 118. The exit notification command includes the member ID of the tracking file 680. Then, the tracking processing unit 62 ends the operation of the procedure shown in the flowchart of FIG. 9.

As described above, when the consumer SA enters the tracking area 111 inside the fourth boundary line 104, the tracking processing unit 62 assigns a unique tracking ID to the consumer SA. Then, the tracking processing unit 62 creates the tracking file 680 in which the tracking ID was described.

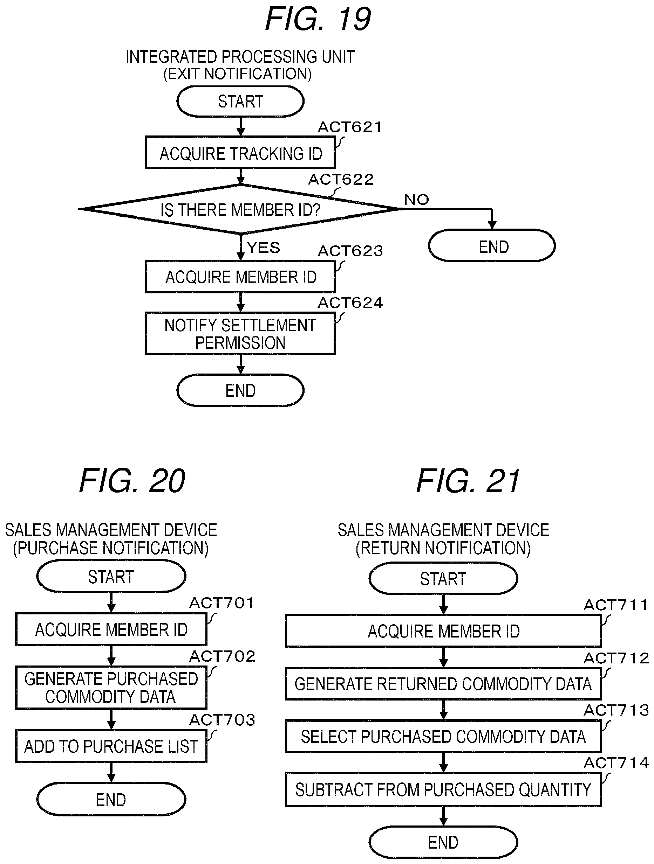

The tracking processing unit 62 starts tracking the consumer SA. Then, the tracking processing unit 62 continues the tracking until the consumer SA leaves the tracking area 111. When the consumer SA leaves the tracking area 111, the tracking processing unit 62 ends the tracking of the consumer. Meanwhile, the tracking processing unit 62 stores the movement data of the consumer SA in the tracking file 680. When the consumer SA leaves the tracking area 111, the tracking processing unit 62 outputs an exit notification command to the integrated processing unit 67. The operation of the integrated processing unit 67 to which the exit notification command was input will be described later with reference to FIG. 19.

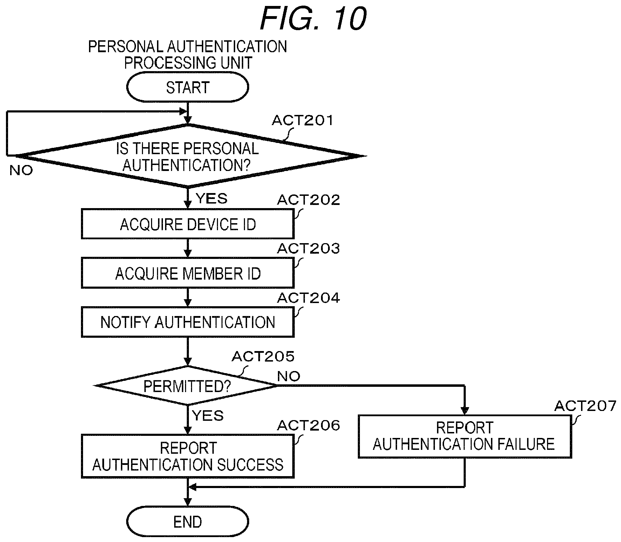

Next, the operation of the personal authentication processing unit 63 will be described with reference to FIG. 10.

The personal authentication processing unit 63 waits for the data for personal authentication to be read by the readers of the personal authentication devices 41 and 42, as ACT 201.

The consumer SA needs to be personally authenticated as a member before purchasing a commodity. Therefore, the consumer SA activates the shopping application installed in the user terminal TM. When the shopping application is activated, the code of the member ID is displayed on the display of the user terminal TM. Therefore, the consumer SA causes the reader of any of the personal authentication devices 41 and 42 to read the code. Then, the data indicated by the code is output from the personal authentication devices 41 and 42 to the personal authentication processing unit 63. A device ID for identifying the personal authentication devices 41 and 42 is added to the data.

When the data is input from the personal authentication devices 41 and 42, the personal authentication processing unit 63 determines whether the data is data representing a code of a member ID. In the case of the data representing a code of a member ID, the personal authentication processing unit 63 determines YES in ACT 201 and proceeds to ACT 202. The personal authentication processing unit 63 acquires the device ID added to the data, as ACT 202. The personal authentication processing unit 63 acquires the member ID from the data, as ACT 203. The personal authentication processing unit 63 outputs the authentication notification command to the integrated processing unit 67, as ACT 204. The authentication notification command includes the device ID acquired in the process of ACT 202 and the member ID acquired in the process of ACT 203.

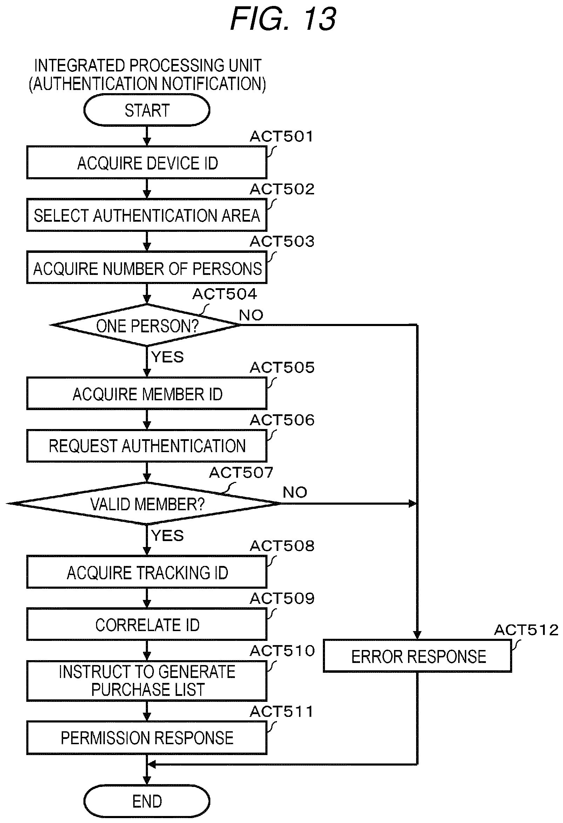

Here, the operation of the integrated processing unit 67 to which the authentication notification command was input will be described with reference to FIG. 13.

The integrated processing unit 67 acquires the device ID from the authentication notification command, as ACT 501. Then, the integrated processing unit 67 selects the authentication area 113 or 114 specified by the device ID, as ACT 502. For example, when the device ID is that of the personal authentication device 41, the integrated processing unit 67 selects the authentication area 113. For example, when the device ID is that of the personal authentication device 42, the integrated processing unit 67 selects the authentication area 114. Here, assuming that the authentication area 113 is selected as an example, the operation description of the integrated processing unit 67 will be continued.

The integrated processing unit 67 acquires the number of consumers in the authentication area 113, as ACT 503. Specifically, the integrated processing unit 67 cooperates with the tracking processing unit 62 to retrieve the tracking file 68 storing the movement data in which the tracking position information corresponding to the time when the authentication notification command was output matches the authentication position information for the authentication area 113. The number of the corresponding tracking files 68 is the number of consumers in the authentication area 113. The authentication position information is a set of X-Y plane coordinates in the authentication area 113. The authentication position information for the authentication area 113 and the authentication position information for the authentication area 114 are set in the auxiliary storage device 603 in advance.

The integrated processing unit 67 checks whether the number of consumers in the authentication area 113 is one, as ACT 504. When the number of consumers is one, that is, when only the consumer SA is in the authentication area 113, the integrated processing unit 67 determines YES in ACT 504 and proceeds to ACT 505. The integrated processing unit 67 acquires the member ID from the authentication notification command, as ACT 505. Then, the integrated processing unit 67 transmits an authentication request command to the member server 8. The authentication request command includes the member ID acquired in the process of ACT 505, that is, the member ID of the consumer SA.

The member server 8 determines the validity of the member ID. Specifically, the member server 8 searches the member database 81 with the member ID included in the authentication request command. As a result, when the valid flag corresponding to the member ID is "1", the member server 8 determines that the member ID is valid. When the valid flag corresponding to the member ID is "0", the member server 8 determines that the member ID is invalid. The member server 8 returns the validity determination result of the member ID to the integrated processing unit 67.

The integrated processing unit 67 checks the validity of the member ID, as ACT 507. When the member server 8 determines that the member ID is valid, the integrated processing unit 67 determines YES in ACT 507 and proceeds to ACT 508. The integrated processing unit 67 acquires the tracking ID from the tracking file 680 of the consumer SA who is in the authentication area 113, as ACT 508. That is, the integrated processing unit 67 acquires the tracking ID from the tracking file 68 that stores the movement data in which the tracking position information corresponding to the time when the authentication notification command was output matches the authentication position information for the authentication area 113. Then, as ACT 509, the integrated processing unit 67 stores the tracking ID acquired in the process of ACT 508 and the member ID acquired in the process of ACT 505 in correlation with each other in the correlation table 69.

The integrated processing unit 67 instructs the sales management device 7 to generate a purchase list 71, as ACT 510. Thereby, in the sales management device 7, the purchase list 71 identified by the member ID acquired in the process of ACT 505 is created. Hereinafter, the purchase list 71 identified by the member ID of the consumer SA is referred to as a purchase list 711.

The integrated processing unit 67 outputs a permission response command to the personal authentication processing unit 63, as ACT 511.

On the other hand, in ACT 504, when there is no consumer in the authentication area 113, or when there are two or more consumers, the integrated processing unit 67 determines NO and proceeds to ACT 512. When it is determined in ACT 507 that the consumer is not a valid member, the integrated processing unit 67 determines NO and proceeds to ACT 512. The integrated processing unit 67 outputs an error response command to the personal authentication processing unit 63, as ACT 512.

When the integrated processing unit 67 outputs a permission response command or an error response command to the personal authentication processing unit 63, the operation of the procedure shown in the flowchart of FIG. 13 ends.

Return to the explanation of FIG. 10.

The personal authentication processing unit 63 in which the authentication notification command was output in ACT 204 waits for a response command from the integrated processing unit 67, as ACT 205. Here, when a permission response command is input, the personal authentication processing unit 63 determines YES in ACT 205 and proceeds to ACT 206. As ACT 206, the personal authentication processing unit 63 controls the personal authentication device 41 so that the personal authentication device 41 in the authentication area 113 reports that the authentication was successful. Thereby, for example, a message such as "Authentication was successful. Please start shopping" is displayed on the display device of the personal authentication device 41.

On the other hand, when an error response command is input, the personal authentication processing unit 63 determines NO in ACT 205 and proceeds to ACT 207. As ACT 207, the personal authentication processing unit 63 controls the personal authentication device 41 so that the personal authentication device 41 in the authentication area 113 reports that the authentication failed. Thereby, for example, a message such as "Authentication failed" is displayed on the display device of the personal authentication device 41. Hereby, the personal authentication processing unit 63 ends the operation of the procedure shown in the flowchart of FIG. 10.

As such, when the consumer SA enters the authentication area 113 and has the member ID read by the reader of the personal authentication device 41, the personal authentication processing unit 63 outputs an authentication notification command to the integrated processing unit 67. In response to the authentication notification command, the integrated processing unit 67 acquires the number of consumers in the authentication area 113. When the number of consumers is one, the integrated processing unit 67 cooperates with the member server 8 to determine the validity of the member ID. Then, when the validity of the member ID is approved, the integrated processing unit 67 outputs a permission response command to the personal authentication processing unit 63. The personal authentication processing unit 63 to which the permission response command was input notifies the authentication success via the personal authentication device 41.

On the other hand, when the validity of the member ID is not approved, the integrated processing unit 67 outputs an error response command to the personal authentication processing unit 63. In response to the error response command, the personal authentication processing unit 63 notifies the authentication failure via the personal authentication device 41.

The integrated processing unit 67 does not determine the validity of the member ID when the number of consumers in the authentication area 113 is not one. Here, the integrated processing unit 67 outputs an error response command to the personal authentication processing unit 63. In response to the error response command, the personal authentication processing unit 63 notifies the authentication failure via the personal authentication device 41.

For example, when only the consumer SA is in the authentication area 113, the consumer who can cause the member ID to be read by the reader of the personal authentication device 41 is limited to the consumer SA. Therefore, the member ID read by the reader and the tracking ID assigned to the consumer SA can be correlated with each other. On the other hand, when there is another consumer SB other than the consumer SA in the authentication area 113, the consumer who can cause the member ID to be read by the reader of the personal authentication device 41 is not limited to the consumer SA. The consumer SB can also cause the member ID to be read by the reader. Therefore, the integrated processing unit 67 does not determine the validity of the member ID when the number of consumers in the authentication area 113 is not one. As a result, the member ID and the tracking ID will not be erroneously correlated with each other.

The consumer SA who succeeded in personal authentication with the member ID can purchase the commodities A to F displayed on the shelf 10. For example, when purchasing the commodity A displayed in the section 201 of the shelf 10, the consumer SA takes out the commodity A from the section 201. Hereinafter, such an action of the consumer SA will be referred to as a purchase action. When canceling the purchase of the commodity A once taken out, the consumer SA returns the commodity A to the original section 201. Hereinafter, such an action of the consumer SA will be referred to as a return action. The shelf control device 6 can register the purchased commodity data of the consumer SA by the commodity monitoring processing unit 64, the activity monitoring processing unit 65, and the integrated processing unit 67 operating in cooperation with each other for the purchase action or the return action in the purchase list 711.

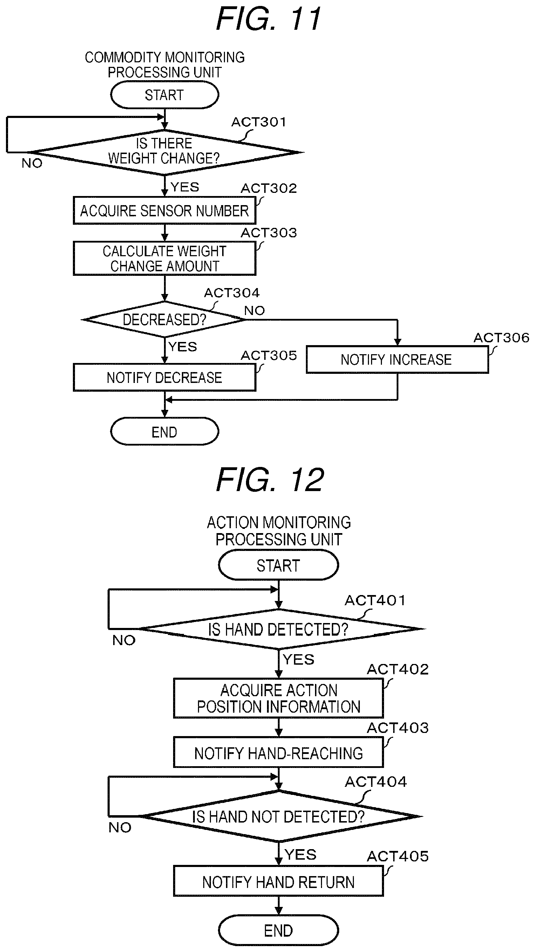

Therefore, first, the operation of the commodity monitoring processing unit 64 will be described with reference to FIG. 11.

In the purchase action, the act of the consumer SA taking out commodities of multiple items at the same time is prohibited. In the return action, the act of the consumer SA taking out the commodity or another commodity without withdrawing the hand that returned the commodity is also prohibited. Incidentally, the act of the consumer SA taking out or returning a plurality of commodities of one item at the same time is allowed.

The commodity monitoring processing unit 64 waits for a weight change to be detected by the commodity monitoring sensor 1, as ACT 301. For example, when the consumer SA makes a purchase action for the commodity A, the commodity monitoring sensor 1 in the section 201 detects a weight change in the decreasing direction. For example, when the consumer SA makes a return action for the commodity A, the commodity monitoring sensor 1 in the section 201 detects a weight change in the increasing direction.

When the commodity monitoring sensor 1 detects a weight change, the commodity monitoring processing unit 64 determines YES in ACT 301 and proceeds to ACT 302. The commodity monitoring processing unit 64 acquires the sensor number of the commodity monitoring sensor 1 that detected the weight change, as ACT 302. Here, the commodity monitoring processing unit 64 acquires the sensor number of the commodity monitoring sensor 1 provided in the section 201, for example, "001".

The commodity monitoring processing unit 64 determines whether the commodity monitoring sensor 1 detects a weight change in the decreasing direction or a weight change in the increasing direction, as ACT 303. When the weight change in the decreasing direction is detected, the commodity monitoring processing unit 64 determines YES in ACT 304 and proceeds to ACT 305. The commodity monitoring processing unit 64 outputs a decrease notification command to the integrated processing unit 67, as ACT 305.

When the weight change in the increasing direction is detected, the commodity monitoring processing unit 64 determines NO in ACT 304 and proceeds to ACT 306. The commodity monitoring processing unit 64 outputs an increase notification command to the integrated processing unit 67, as ACT 306.

The decrease notification command or the increase notification command includes the sensor number acquired in the process of ACT 302 and the weight change amount calculated in the process of ACT 303. Thus, the commodity monitoring processing unit 64 ends the operation of the procedure shown in the flowchart of FIG. 11.

Next, the operation of the action monitoring processing unit 65 will be described with reference to FIG. 12.

The action monitoring processing unit 65 waits for the action monitoring sensor 3 to detect the hand of the consumer SA, as ACT 401. When the consumer SA in the purchase area 112 reaches out their hand for the shelf 10, the action monitoring sensor 3 detects the hand. When the hand is detected, the action monitoring processing unit 65 determines YES in ACT 401 and proceeds to ACT 402. The action monitoring processing unit 65 acquires action position information of the point where the hand of the consumer SA is detected, as ACT 402. Then, the action monitoring processing unit 65 outputs a hand-reaching notification command to the integrated processing unit 67, as ACT 403. The hand-reaching notification command includes the action position information acquired in the process of ACT 402.

The action monitoring processing unit 65 waits for the hand of the consumer SA to be no longer detected, as ACT 404. When the action monitoring sensor 3 no longer detects the hand of the consumer SA, the action monitoring processing unit 65 determines YES in ACT 404 and proceeds to ACT 405. The action monitoring processing unit 65 outputs a hand-return notification command to the integrated processing unit 67, as ACT 405. The hand-return notification command also includes the action position information acquired in the process of ACT 402.

As such, when the consumer SA reaches out their hand for the shelf 10 to take out the commodity A from the section 201, the action monitoring sensor 3 first detects the hand of the consumer SA. Upon the detection of the hand, the action monitoring processing unit 65 outputs a hand-reaching notification command to the integrated processing unit 67. The hand-reaching notification command includes the action position information indicating the position where the hand of the consumer SA was detected.

Next, when the consumer SA picks up only one commodity A from the section 201, the commodity monitoring sensor 1 in the section 201 detects a weight change in the decreasing direction. Due to the weight change, the commodity monitoring processing unit 64 outputs a decrease notification command to the integrated processing unit 67. The decrease notification command includes the sensor number of the commodity monitoring sensor 1 that detected the weight change and the weight change amount. The weight change amount matches the unit weight of the commodity A. Incidentally, when the consumer SA collectively picks up two commodities A from the section 201, the weight change amount is equal to twice the unit weight of the commodity A.

After that, when the consumer SA withdraws the hand holding the commodity A from the shelf 10, the hand of the consumer SA detected by the action monitoring sensor 3 is no longer detected. When the hand is not detected, the action monitoring processing unit 65 outputs a hand-return notification command to the integrated processing unit 67. The hand-return notification command also includes the action position information indicating the position where the hand of the consumer SA was detected.

On the other hand, when the consumer SA reaches out their hand holding the commodity A to the shelf 10 in order to cancel the purchase of the commodity A, the action monitoring processing unit 65 first outputs a hand-reaching notification command to the integrated processing unit 67.

Next, when the consumer SA returns the commodity A to the section 201, the commodity monitoring sensor 1 in the section 201 detects a weight change in the increasing direction. Due to the weight change, an increase notification command is output from the commodity monitoring processing unit 64 to the integrated processing unit 67. The increase notification command includes the sensor number of the commodity monitoring sensor 1 that detected the weight change and the weight change amount. The weight change amount matches the unit weight of the commodity A. Incidentally, when the consumer SA collectively returns two commodities A to the section 201, the weight change amount is equal to twice the unit weight of the commodity A.

After that, when the consumer SA withdraws their hand from the shelf 10, the action monitoring processing unit 65 outputs a hand-return notification command to the integrated processing unit 67.

As described above, with respect to the purchase action of the consumer SA, the action monitoring processing unit 65 first outputs a hand-reaching notification command to the integrated processing unit 67. Then, the commodity monitoring processing unit 64 outputs a decrease notification command to the integrated processing unit 67. Then, the action monitoring processing unit 65 outputs a hand-return notification command to the integrated processing unit 67.

If the consumer SA withdraws their hand without picking up a commodity, the decrease notification command is not output. That is, the hand-reaching notification command is output, and subsequently, the hand-return notification command is output.

On the other hand, with respect to the return action of the consumer SA, first, the action monitoring processing unit 65 outputs a hand-reaching notification command to the integrated processing unit 67. Next, the commodity monitoring processing unit 64 outputs an increase notification command to the integrated processing unit 67. Then, the action monitoring processing unit 65 outputs a hand-return notification command to the integrated processing unit 67.

If the consumer SA withdraws their hand without returning a commodity to the shelf 10, the increase notification command is not output. That is, the hand-reaching notification command is output, and subsequently, the hand-return notification command is output.

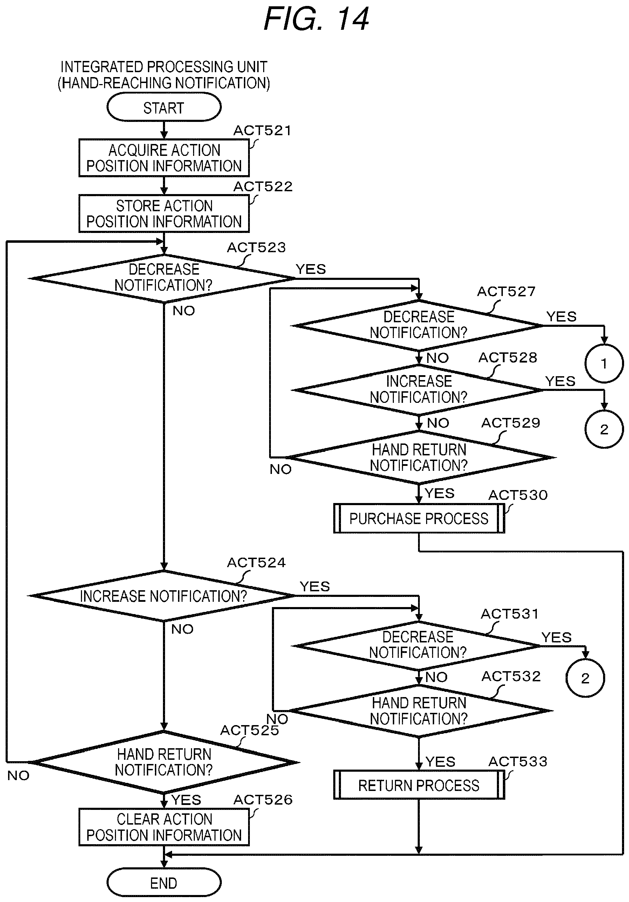

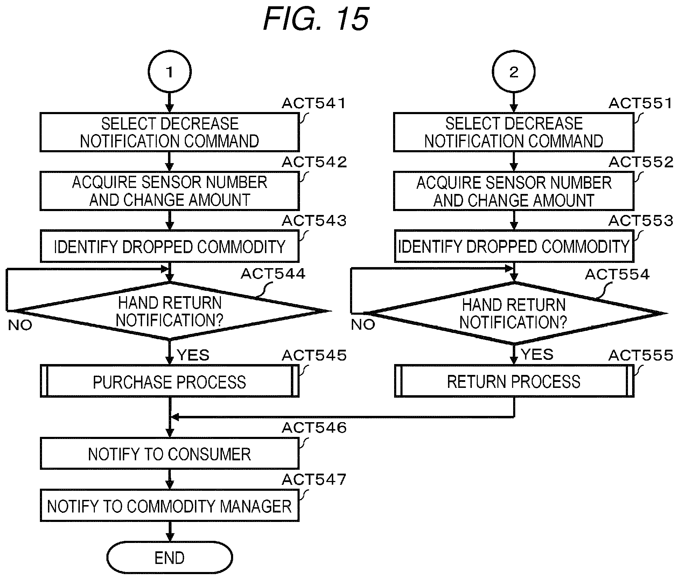

As described above, in response to the consumer's purchase action or return action, the action monitoring processing unit 65 always outputs a hand-reaching notification command to the integrated processing unit 67. Therefore, the operation of the integrated processing unit 67 to which a hand-reaching notification command was input will be described with reference to FIGS. 14 and 15.

The integrated processing unit 67 acquires the action position information from the hand-reaching notification command, as ACT 521. Then, the integrated processing unit 67 stores the action position information, as ACT 522. The storage destination of the action position information is, for example, the main memory 602. The storage destination of the action position information may be the auxiliary storage device 603.

The integrated processing unit 67 checks whether a decrease notification command was input, as ACT 523. If a decrease notification command was not input, the integrated processing unit 67 determines NO in ACT 523 and proceeds to ACT 524. The integrated processing unit 67 checks whether an increase notification command was input, as ACT 524. If an increase notification command was not input, the integrated processing unit 67 determines NO in ACT 524 and proceeds to ACT 525. The integrated processing unit 67 checks whether a hand-return notification command was input, as ACT 525. When a hand-return notification command was not input, the integrated processing unit 67 returns to ACT 523. Here, the integrated processing unit 67 waits for a decrease notification command, an increase notification command, or a hand-return notification command to be input, as ACT 523 to ACT 525.

In the standby state of ACT 523 to ACT 525, when the hand-return notification command was input, the integrated processing unit 67 determines YES in ACT 525 and proceeds to ACT 526. The integrated processing unit 67 clears the action position information, as ACT 526. Then, the integrated processing unit 67 ends the operation of the procedure shown in the flowcharts of FIGS. 14 and 15.

As described above, the integrated processing unit 67 does not execute a special process when a hand-reaching notification command was input but a hand-return notification command was input without a decrease notification command or an increase notification command being input. That is, when the consumer SA who made a purchase action withdraws their hand without picking up a commodity, or when the consumer SA who made a return action withdraws their hand without returning a commodity, the integrated processing unit 67 does not execute a special process.

When a decrease notification command was input in the standby state of ACT 523 to ACT 525, the integrated processing unit 67 determines YES in ACT 523 and proceeds to ACT 527. The integration processing unit 67 checks whether a further decrease notification command was input, as ACT 527. If the decrease notification command was not input, the integrated processing unit 67 determines NO in ACT 527 and proceeds to ACT 528. The integrated processing unit 67 checks whether an increase notification command was input, as ACT 528. When an increase notification command was not input, the integrated processing unit 67 determines NO in ACT 528 and proceeds to ACT 529. The integrated processing unit 67 checks whether a hand-return notification command was input, as ACT 529. When a return notification command was not input, the integration processing unit 67 determines NO in ACT 529 and returns to ACT 527. Here, as ACT 527 to ACT 529, the integrated processing unit 67 waits for a decrease notification command, an increase notification command, or a hand-return notification command to be input.

When a decrease notification command is input in the standby state of ACT 527 to ACT 529, the integrated processing unit 67 determines YES in ACT 527 and proceeds to the process of ACT 541 in FIG. 15. The processes after ACT 541 will be described later.

When an increase notification command is input in the standby state of ACT 527 to ACT 529, the integrated processing unit 67 determines YES in ACT 528 and proceeds to the process of ACT 551 in FIG. 15. The processes after ACT 551 will be described later.

When a hand-return notification command is input in the standby state of ACT 527 to ACT 529, the integrated processing unit 67 determines YES in ACT 529 and proceeds to ACT 530. The integrated processing unit 67 executes a purchase process, as ACT 530. Details of the purchase process will be described later. When the purchase process is completed, the integrated processing unit 67 ends the operation of the procedure shown in the flowcharts of FIGS. 14 and 15.

As such, the integrated processing unit 67 executes the purchase process when a decrease notification command is input after the hand-reaching notification command was input, and then a hand-return notification command is input. That is, when the consumer SA makes a purchase action, the integrated processing unit 67 executes the purchase process.

When an increase notification command is input in the standby state of ACT 523 to ACT 525, the integrated processing unit 67 determines YES in ACT 524 and proceeds to ACT 531. The integrated processing unit 67 checks whether a decrease notification command was input, as ACT 531. When a decrease notification command was not input, the integrated processing unit 67 determines NO in ACT 531 and proceeds to ACT 532. The integrated processing unit 67 checks whether a hand-return notification command was input, as ACT 532. When a hand-return notification command was not input, the integrated processing unit 67 determines NO in ACT 532 and returns to ACT 531. Here, the integrated processing unit 67 waits for a decrease notification command or a hand-return notification command to be input, as ACT 531 and ACT 532.

When a decrease notification command is input in the standby state of ACT 531 and ACT 532, the integrated processing unit 67 determines YES in ACT 531 and proceeds to the process of ACT 551 in FIG. 15. The processes after ACT 551 will be described later.

When a hand-return notification command is input in the standby state of ACT 531 and ACT 532, the integrated processing unit 67 determines YES in ACT 532 and proceeds to ACT 533. The integrated processing unit 67 executes a return process, as ACT 533. Details of the return process will be described later. When the return process is completed, the integration processing unit 67 ends the operation of the procedure shown in the flowcharts of FIGS. 14 and 15.

As such, the integrated processing unit 67 executes a return process when an increase notification command is input after a hand-reaching notification command was input, and then the hand-return notification command is input. That is, when the consumer SA makes a return action, the integrated processing unit 67 executes the return process.

By the way, there are the following examples as an example where a commodity is unexpectedly moved from the display place. In the example, for example, when the consumer SA tries to take out the commodity C from the section 203, the commodity D displayed in the adjacent section 204 may drop.

Here, commands are input to the integrated processing unit 67 in the following order. First, when the consumer SA reaches out their hand for the shelf 10, a hand-reaching notification command is input from the action monitoring processing unit 65. Subsequently, when the consumer SA picks up the commodity C, a decrease notification command for the commodity C is input from the commodity monitoring processing unit 64. Then, when the commodity D drops, a decrease notification command for the commodity D is input from the commodity monitoring processing unit 64. That is, the integrated processing unit 67 determines YES in ACT 523, determines YES in ACT 527, and proceeds to ACT 541 in FIG. 15.

The commodity D may drop before the consumer SA picks up the commodity C. Here, a decrease notification command for the commodity D is input to the integrated processing unit 67 first, and then a decrease notification command for the commodity C is input to the integrated processing unit 67.

Therefore, the integrated processing unit 67 selects the decrease notification command due to the drop of the commodity from the two decrease notification commands, as ACT 541. Specifically, the integrated processing unit 67 selects the decrease notification command based on the signal from the commodity monitoring sensor 1 in the section farther from the point specified by the action position information stored in the process of ACT 522.

The integrated processing unit 67 acquires the sensor number and the weight change amount included in the selected decrease notification command, as ACT 542. Then, the integrated processing unit 67 identifies the dropped commodity, as ACT 543. That is, the integrated processing unit 67 searches the commodity data file 61 with the sensor number and the weight change amount acquired from the decrease notification command and acquires the commodity name of the commodity data including the sensor number and the weight change amount.

When the consumer SA withdraws the hand holding the commodity C, a hand-return notification command is input to the integrated processing unit 67. Therefore, the integrated processing unit 67 waits for a hand-return notification command, as ACT 544. Then, when a hand-return notification command is input, the integrated processing unit 67 determines YES in ACT 544 and proceeds to ACT 545. The integrated processing unit 67 executes a purchase process, as ACT 545. The purchase process is executed based on the decrease notification command not selected in ACT 541.

As ACT 546, the integrated processing unit 67 outputs voice data for notifying the consumer of a caution associated with the drop of the commodity, to the voice synthesis unit 66. As a result, the voice synthesis unit 66 synthesizes a voice for notifying the consumer of a caution associated with the drop of the commodity. Then, the speaker 5 outputs a voice, for example, "Commodity D was dropped. Do not touch the dropped Commodity D." Here, the commodity D is the commodity name of the commodity identified in ACT 543.

As ACT 547, the integrated processing unit 67 outputs notification data to the monitoring terminal AT to notify the commodity manager of the work associated with the drop of the commodity. The notification data is transmitted to the access point AP via the communication network NW, further wirelessly transmitted from the access point AP, and received by the monitoring terminal AT. As a result, the monitoring terminal AT outputs a message instructing to immediately go to collect the commodity D because the commodity D was dropped, for example, by display or voice.

Another example of unexpected movement of commodities from the display place is as follows. In the example, for example, when the consumer SA tries to return the commodity C once purchased to the section 203, the commodity D displayed in the adjacent section 204 drops.

Here, commands are input to the integrated processing unit 67 in the following order. First, when the consumer SA reaches out their hand for the shelf 10, a hand-reaching notification command is input from the action monitoring processing unit 65. Subsequently, when the consumer SA returns the commodity C, an increase notification command for the commodity C is input from the commodity monitoring processing unit 64. Then, when the commodity D drops, a decrease notification command for the commodity D is input from the commodity monitoring processing unit 64. That is, the integrated processing unit 67 determines YES in ACT 524, determines YES in ACT 531, and proceeds to ACT 551 in FIG. 15.

The commodity D may drop before the consumer SA returns the commodity C. Here, a decrease notification command for the commodity D is first input to the integrated processing unit 67, and then an increase notification command for the commodity C is input to the integrated processing unit 67. That is, the integrated processing unit 67 determines YES in ACT 523, determines YES in ACT 528, and also proceeds to ACT 551 in FIG. 15.

The integrated processing unit 67 selects a decrease notification command due to a commodity drop, as ACT 551. That is, when the commodity D is dropped after returning the commodity C, the integrated processing unit 67 selects the decrease notification command whose input is confirmed in the process of ACT 531. When the commodity D is dropped before returning the commodity C, the integrated processing unit 67 selects the decrease notification command whose input is confirmed in the process of ACT 523.

The integrated processing unit 67 acquires the sensor number and the weight change amount included in the selected decrease notification command, as ACT 552. Then, the integrated processing unit 67 identifies the dropped commodity, as ACT 553, similarly to the case of ACT 543.

When the consumer SA withdraws the hand that returned the commodity C, a hand-return notification command is input to the integrated processing unit 67. Therefore, the integrated processing unit 67 waits for a hand-return notification command, as ACT 554. Then, when a hand-return notification command is input, the integrated processing unit 67 determines YES in ACT 554 and proceeds to ACT 555. The integrated processing unit 67 executes a return process, as ACT 555. The return process is executed based on the increase notification command whose input is confirmed in the process of ACT 524 or the increase notification command whose input is confirmed in the process of ACT 528.

The integrated processing unit 67 that completed the return process proceeds to ACT 546 described above. Then, the integrated processing unit 67 executes the processes of ACT 546 and ACT 547. As a result, the voice synthesis unit 66 synthesizes a voice for notifying the consumer of the caution correlated with the drop of the commodity. Then, the speaker 5 outputs a voice, for example, "Commodity D was dropped. Do not touch the dropped Commodity D." Here, the commodity D is the commodity name of the commodity specified in ACT 553. The monitoring terminal AT outputs a message instructing to immediately go to collect the commodity D because the commodity D was dropped, for example, by display and voice.

With the above, the integrated processing unit 67 ends the processing of the procedure shown in the flowcharts of FIGS. 14 and 15.

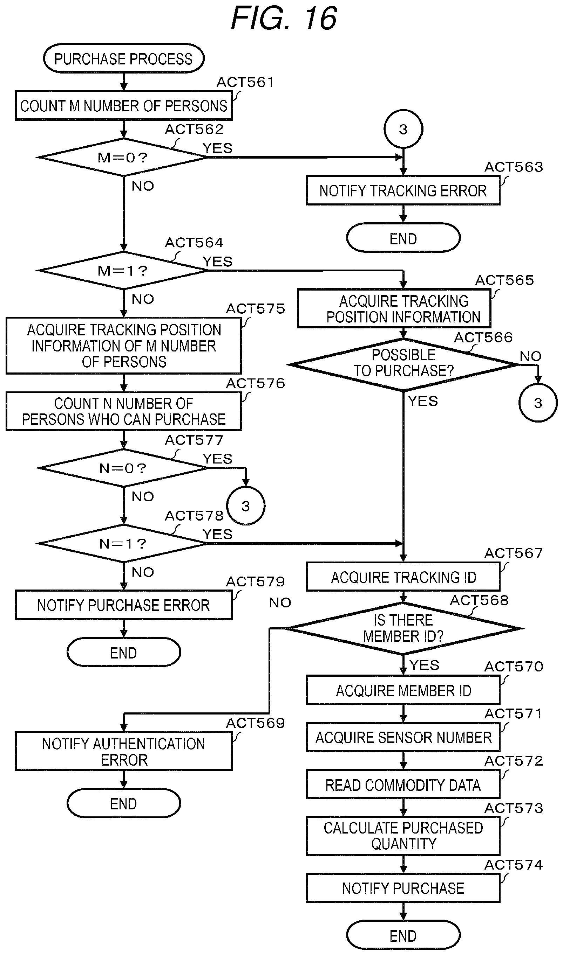

FIG. 16 is a flowchart showing aspects of the purchase process. When the purchase process is started, the integration processing unit 67 counts the number M of consumers in the purchase area 112, as ACT 561. Specifically, the integrated processing unit 67 counts the number of tracking files 68 in which the tracking position information of the movement data corresponding to the current time matches the purchase position information for the purchase area 112, among the tracking files 68 stored in the tracking processing unit 62. The number of relevant tracking files 68 is the number M of consumers in the purchase area 112. The purchase position information is a set of X-Y plane coordinates in the purchase area 112. The purchase position information for the purchase area 112 is set in the auxiliary storage device 603 in advance.

The integrated processing unit 67 checks whether the number M of consumers in the purchase area 112 is 0, as ACT 562. When the number M of persons is 0, there is a possibility that a consumer who cannot be tracked by the tracking processing unit 62 took out a commodity from the shelf 10. Here, the integrated processing unit 67 determines YES in ACT 562 and proceeds to ACT 563. The integrated processing unit 67 outputs voice data of a tracking error to the voice synthesis unit 66, as ACT 563. As a result, the voice synthesis unit 66 synthesizes a voice indicating the tracking error. Then, the speaker 5 outputs a voice, for example, "An error occurred, and shopping is not possible". Then, the integrated processing unit 67 ends the purchase process.

If the number M of consumers in the purchase area 112 is not 0, the integration processing unit 67 determines NO in ACT 562 and proceeds to ACT 564. The integrated processing unit 67 checks whether the number M of consumers in the purchase area 112 is one, as ACT 564. If there is only one tracking file 68 in which the tracking position information of the movement data corresponding to the current time matches the purchase position information, the number M of persons is one. Hereinafter, the relevant tracking file 68 will be referred to as a target tracking file 68. For example, when there is only one consumer SA in the purchase area 112, the tracking file 680 is the target tracking file 680.

When the number M of consumers in the purchase area 112 is one, the integrated processing unit 67 determines YES in ACT 564 and proceeds to ACT 565. The integrated processing unit 67 acquires the tracking position information of the movement data corresponding to the current time from the target tracking file 680, as ACT 565.

As ACT 566, based on the tracking position information and the action position information stored in the process of ACT 522 of FIG. 14, the integrated processing unit 67 checks whether the purchase action is possible by the consumer SA tracked by the tracking ID described in the target tracking file 680. Specifically, the integrated processing unit 67 checks whether the consumer SA who is at the location specified by the tracking location information can reach out their hand and take out a commodity from the location specified by the action position information. When the act of taking out a commodity is impossible, the integrated processing unit 67 determines that the purchase action is impossible. The integrated processing unit 67 determines NO in ACT 566 and proceeds to ACT 563. The integrated processing unit 67 outputs voice data of a tracking error to the voice synthesis unit 66, as ACT 563. Then, the integrated processing unit 67 ends the purchase process.

If the purchase action is possible, the integrated processing unit 67 determines YES in ACT 566 and proceeds to ACT 567. The integrated processing unit 67 acquires the tracking ID from the target tracking file 680, as ACT 567.

Next, the integrated processing unit 67 searches the correlation table 69 and checks whether the tracking ID is correlated with the member ID, as ACT 568. If the tracking ID is not correlated with the member ID, it is presumed that a consumer whose member ID is not authorized made a purchase action. Here, the integrated processing unit 67 determines NO in ACT 568 and proceeds to ACT 569. The integrated processing unit 67 outputs voice data of an authentication error to the voice synthesis unit 66, as ACT 569. As a result, the voice synthesis unit 66 synthesizes a voice indicating the authentication error. Then, the speaker 5 outputs a voice, for example, "Member ID is not authenticated". Then, the integrated processing unit 67 ends the purchase process.

If the tracking ID is correlated with the member ID, the integrated processing unit 67 determines YES in ACT 568 and proceeds to ACT 570. The integrated processing unit 67 acquires the member ID correlated with the tracking ID, as ACT 570. The integrated processing unit 67 acquires the sensor number from the decrease notification command, as ACT 571. The decrease notification command is the one received from the commodity monitoring sensor 1 in ACT 523 of FIG. 14. Alternatively, the decrease notification command is the decrease notification command that was not selected in ACT 541 of FIG. 15.

The integrated processing unit 67 reads from the commodity data file 61 commodity data including the commodity code, the commodity name, and the unit weight stored together with the sensor number, as ACT 572. The integrated processing unit 67 calculates the purchased quantity, as ACT 573. Specifically, the integrated processing unit 67 acquires the weight change amount from the decrease notification command. Then, the integration processing unit 67 divides the weight change amount by the unit weight. As a result, the purchased quantity is calculated by rounding down when the value of the first decimal place is "1" and rounding up when the value of the first decimal place is "9".

If the value of the first decimal place is "2" to "8", it is assumed that the purchased quantity cannot be calculated. Accordingly, the purchased quantity may be calculated by rounding down when the value of the first decimal place is "1" or "2" and rounding up when the value of the first decimal place is "8" or "9". Alternatively, if the weight change amount cannot be divided by the unit weight, it may be assumed that the purchased quantity cannot be calculated. Generally, each commodity is properly displayed in the section of the shelf 10. Therefore, since the weight change amount is divisible by the unit weight, the purchased quantity does not become incalculable.

The integrated processing unit 67 outputs a purchase notification command to the sales management device 7, as ACT 574. The purchase notification command includes the member ID acquired in the process of ACT 570, the commodity code, the commodity name, and the unit price of the commodity data read in the process of ACT 572, and the purchased quantity calculated in the process of ACT 573. Then, the integrated processing unit 67 ends the purchase process.

On the other hand, when there are two or more target tracking files 68, that is, when the number M of consumers in the purchase area 112 is two or more, the integrated processing unit 67 determines NO in ACT 564 and proceeds to ACT 575. The integrated processing unit 67 acquires the tracking position information of the movement data corresponding to the current time from all the target tracking files 68, as ACT 575.

As ACT 576, the integrated processing unit 67 counts the number N of consumers who can make a purchase action based on the tracking position information acquired from the target tracking file 68 and the action position information stored in the process of ACT 522 of FIG. 14. Specifically, the integrated processing unit 67 checks whether a consumer who is at the location specified by the tracking position information can reach out their hand and take out a commodity from the location specified by the action position information for each target tracking file 68. Then, the integrated processing unit 67 counts the number of target tracking files 68 that were determined to be capable of taking out a commodity as the number N of consumers who can make a purchase action.

The integrated processing unit 67 confirms whether the number N of consumers who can make a purchase action is 0, as ACT 577. When the number N of persons is 0, the integrated processing unit 67 determines YES in ACT 577 and proceeds to ACT 563. Then, the integration processing unit 67 executes the process of ACT 563 in the same manner as described above. Then, the integrated processing unit 67 ends the purchase process.

If the number N of consumers who can make a purchase action is not 0, the integrated processing unit 67 determines NO in ACT 577 and proceeds to ACT 578. The integrated processing unit 67 checks whether the number N of consumers who can make a purchase action is one, as ACT 578. When the number N of persons is one, it can be specified that the one consumer made a purchase action. The integrated processing unit 67 determines YES in ACT 578 and proceeds to ACT 567. Then, the integrated processing unit 67 executes the processes of ACT 567 to ACT 574 in the same manner as described above. Then, the integrated processing unit 67 ends the purchase process.

If the number N of consumers who can make a purchase action is two or more, the purchaser cannot be specified. The integrated processing unit 67 determines NO in ACT 578 and proceeds to ACT 579. The integrated processing unit 67 outputs voice data of a purchase error to the voice synthesis unit 66, as ACT 579. As a result, the voice synthesis unit 66 synthesizes a voice indicating the purchase error. Then, the speaker 5 outputs a voice, for example, "Since the purchaser cannot be specified, an error occurred". Then, the integrated processing unit 67 ends the purchase process.

As such, the integrated processing unit 67 specifies the one consumer in the purchase area 112 as the purchaser of the commodity taken out of the shelf 10 by executing the purchase process for the purchase action of the consumer. Then, the integrated processing unit 67 transmits a purchase notification command including the member ID of the consumer specified as the purchaser and the purchased commodity data, to the sales management device 7.

Then, next, the operation of the sales management device 7 that received the purchase notification command will be described with reference to FIG. 20.

The sales management device 7 acquires the member ID from the purchase notification command, as ACT 701. The sales management device 7 generates purchased commodity data based on the commodity data included in the purchase notification command, that is, the commodity code, the commodity name, the unit price, and the purchased quantity, as ACT 702. Then, as ACT 703, the sales management device 7 adds the purchased commodity data to the purchase list 71 in which the member ID acquired in the process of ACT 701 is set. Thus, the sales management device 7 ends the operation of the procedure shown in the flowchart of FIG. 20.

As such, every time the sales management device 7 receives a purchase notification command from the integrated processing unit 67, the sales management device 7 adds purchased commodity data to the purchase list 71 in which the member ID included in the purchase notification command is set.

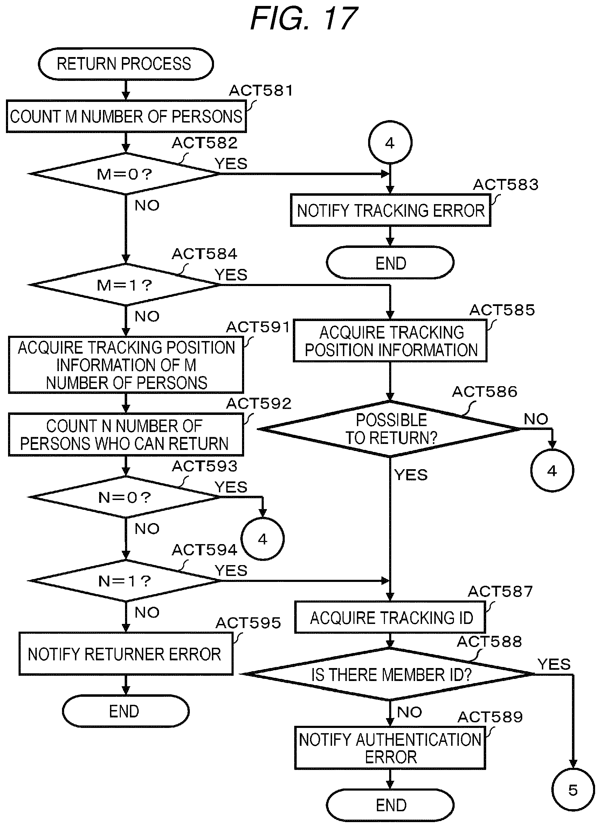

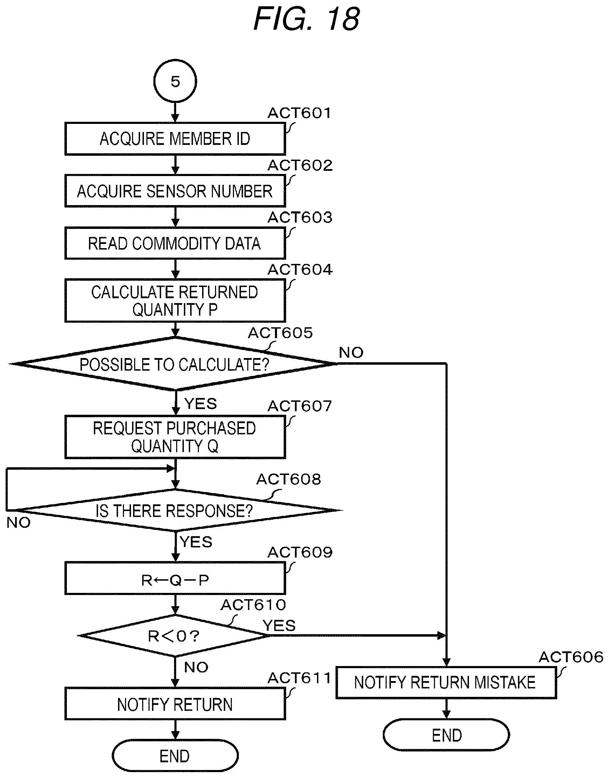

FIGS. 17 and 18 are flowcharts showing aspects of the return process. When the return process is started, the integration processing unit 67 counts the number M of consumers in the purchase area 112, as ACT 581. The integrated processing unit 67 counts the number M of consumers in the purchase area 112 in the same manner as the process of ACT 561 of the purchase process.

The integrated processing unit 67 checks whether the number M of consumers in the purchase area 112 is 0, as ACT 582. When the number M of persons is 0, the integrated processing unit 67 determines YES in ACT 582 and proceeds to ACT 583. The integrated processing unit 67 outputs voice data of a tracking error to the voice synthesis unit 66, as ACT 583. As a result, the voice synthesis unit 66 synthesizes a voice indicating the tracking error. Then, the speaker 5 outputs a voice, for example, "An error occurred, and shopping is not possible". Then, the integrated processing unit 67 ends the return process.

If the number M of consumers in the purchase area 112 is not 0, the integrated processing unit 67 determines NO in ACT 582 and proceeds to ACT 584. The integrated processing unit 67 checks whether the number M of consumers in the purchase area 112 is one, as ACT 584.

When the number M of consumers in the purchase area 112 is one, the integrated processing unit 67 determines YES in ACT 584 and proceeds to ACT 585. The integrated processing unit 67 acquires the tracking position information of the movement data corresponding to the current time from the target tracking file 68, as ACT 585. As ACT 586, based on the tracking position information and the action position information stored in the process of ACT 522 of FIG. 14, the integrated processing unit 67 checks whether the return action is possible by the consumer tracked with the tracking ID described in the target tracking file 68. Specifically, the integrated processing unit 67 checks whether the consumer who is at the location specified by the tracking position information can reach out their hand and return a commodity from the location specified by the action position information. When the act of returning a commodity is impossible, the integrated processing unit 67 determines that the return action is impossible. Here, the integrated processing unit 67 determines NO in ACT 586 and proceeds to ACT 583. The integrated processing unit 67 outputs voice data of a tracking error to the voice synthesis unit 66, as ACT 583. Then, the integrated processing unit 67 ends the return process.

If the return action is possible, the integrated processing unit 67 determines YES in ACT 586 and proceeds to ACT 587. The integrated processing unit 67 acquires the tracking ID from the target tracking file 68, as ACT 587. Then, the integrated processing unit 67 searches the correlation table 69 and checks whether the tracking ID is correlated with the member ID, as ACT 588. When the tracking ID is not correlated with the member ID, the integrated processing unit 67 outputs voice data of an authentication error to the voice synthesis unit 66, as ACT 589. As a result, the voice synthesis unit 66 synthesizes a voice indicating the authentication error. Then, the speaker 5 outputs a voice, for example, "Member ID is not authenticated". Then, the integrated processing unit 67 ends the return process.

If the tracking ID is correlated with the member ID, the integrated processing unit 67 determines YES in ACT 588 and proceeds to ACT 601 in FIG. 18. The integrated processing unit 67 acquires the member ID correlated with the tracking ID, as ACT 601. The integrated processing unit 67 acquires the sensor number from the increase notification command, as ACT 602. The increase notification command is the one received from the commodity monitoring sensor 1 in ACT 524 of FIG. 14.

The integrated processing unit 67 reads from the commodity data file 61 the commodity data including the commodity code, commodity name, and the unit weight stored together with the sensor number, as ACT 603. The integrated processing unit 67 calculates the returned quantity P, as ACT 604. Specifically, the integrated processing unit 67 acquires the weight change amount from the increase notification command. Then, the integration processing unit 67 divides the weight change amount by the unit weight. As a result, the returned quantity P is calculated by rounding down when the value of the first decimal place is "1" and rounding up when the value of the first decimal place is "9".

If the value of the first decimal place is "2" to "8", it is assumed that the returned quantity P cannot be calculated. Accordingly, the returned quantity P may be calculated by rounding down when the value of the first decimal place is "1" or "2" and rounding up when the value of the first decimal place is "8" or "9". Alternatively, if the weight change amount cannot be divided by the unit weight, the returned quantity P may not be calculated.

The integrated processing unit 67 determines whether the returned quantity P was able to be calculated, as ACT 605. The fact that the returned quantity P cannot be calculated is considered that the consumer returned the commodity to a different commodity section having a different unit weight. For example, as shown in FIG. 4, when the commodity A having a unit weight of 500 grams is returned to the section 203 in which the commodity C is displayed, since the unit weight of the commodity C is 600 grams, the quotient becomes 0.83. Similarly, when the commodity A is returned to the section 205 in which the commodity E is displayed, since the unit weight of the commodity E is 800 grams, the quotient is 0.625. Therefore, in either case, the returned quantity P cannot be calculated.

If the returned quantity P cannot be calculated, the integrated processing unit 67 determines NO in ACT 605 and proceeds to ACT 606. The integrated processing unit 67 outputs voice data of a return mistake error to the voice synthesis unit 66, as ACT 606. As a result, the voice synthesis unit 66 synthesizes a voice indicating the return mistake error. Then, the speaker 5 outputs a voice, for example, "The location to return the commodity is different". Then, the integrated processing unit 67 ends the return process.

If the returned quantity P can be calculated, the integrated processing unit 67 determines YES in ACT 605 and proceeds to ACT 607. The integrated processing unit 67 outputs a purchased quantity request command to the sales management device 7, as ACT 607. The purchased quantity request command includes the member ID acquired in the process of ACT 601 and the commodity code of the commodity data acquired in the process of ACT 603.

The sales management device 7 that received the purchased quantity request command detects the purchased quantity Q stored in correlation with the commodity code from the purchase list 71 in which the member ID is set, and responds to the integrated processing unit 67. Here, when the data of the commodity code is not stored in the purchase list 71, the sales management device 7 responds with "0" as the purchased quantity Q.

The integrated processing unit 67 that output the purchased quantity request command waits for the purchased quantity Q to be responded, as ACT 608. When the purchased quantity Q is returned, the integration processing unit 67 calculates the difference value R by subtracting the returned quantity P from the purchased quantity Q, as ACT 609. The integrated processing unit 67 checks whether the difference value R is negative, as ACT 610.

For example, it is assumed that the consumer SA took out the commodity A from the shelf 10 but did not take out the commodity B. Here, the purchase list 711 of the consumer SA stores the data of the commodity A (purchased quantity = 1) but does not store the data of the commodity B. Here, it is assumed that the consumer SA mistakenly returns the commodity A to the section 202 of the commodity B. Then, since the unit weights of the commodity A and the commodity B are equal, the returned quantity P is calculated as "1". However, since the purchase list 711 does not store the data of the commodity B, the purchased quantity Q is "0". Therefore, the difference value R becomes "-1". Incidentally, when the consumer SA returns the commodity A to the section 201, the purchased quantity Q is "1", and thus, the difference value R is "0".

If the difference value R is negative, the integrated processing unit 67 determines YES in ACT 610 and proceeds to ACT 606. The integrated processing unit 67 outputs the voice data of a return mistake error to the voice synthesis unit 66. Then, the integrated processing unit 67 ends the return process.

When the difference value R is "0" or "1" or more, the integrated processing unit 67 determines NO in ACT 610 and proceeds to ACT 611. The integrated processing unit 67 outputs a return notification command to the sales management device 7, as ACT 611. The return notification command includes the member ID acquired in the process of ACT 601, the commodity code, the commodity name, and the unit price of the commodity data read in the process of ACT 603, and the returned quantity P calculated in the process of ACT 604. Then, the integrated processing unit 67 ends the return process.

When the difference value R is "0" or "1" or more, the integrated processing unit 67 determines NO in ACT 590 and proceeds to ACT 591. The integrated processing unit 67 outputs a return notification command to the sales management device 7, as ACT 591. The return notification command includes the member ID acquired in the process of ACT 581, the commodity code, the commodity name, and the unit price of the commodity data read in the process of ACT 583, and the returned quantity P calculated in the process of ACT 584. Then, the integrated processing unit 67 ends the return process.

Return to the explanation of FIG. 17.

If the number M of consumers in the purchase area 112 is 2 or more, the integrated processing unit 67 determines NO in ACT 584 and proceeds to ACT 591. The integrated processing unit 67 acquires the tracking position information of the movement data corresponding to the current time from all the target tracking files 68, as ACT 591. As ACT 592, the integrated processing unit 67 counts the number N of consumers who can make a return action based on the tracking position information acquired from the target tracking file 68 and the action position information stored in ACT 522 of FIG. 14.

The integrated processing unit 67 checks whether the number N of consumers who can make a return action is 0, as ACT 593. When the number N of persons is 0, the integrated processing unit 67 determines YES in ACT 593 and proceeds to ACT 583. The integrated processing unit 67 outputs the voice data of a tracking error to the voice synthesis unit 66, as ACT 583. Then, the integrated processing unit 67 ends the return process.

If the number N of consumers who can make a return action is not 0, the integrated processing unit 67 determines NO in ACT 593 and proceeds to ACT 594. The integrated processing unit 67 checks whether the number N of consumers who can make a return action is one, as ACT 594. When the number N of persons is one, the one consumer can be specified as a returner. The integrated processing unit 67 determines YES in ACT 594 and proceeds to ACT 587. Then, the integrated processing unit 67 executes the processes of ACT 587 to ACT 589 and ACT 601 to ACT 611 in the same manner as described above.

If the number N of consumers who can make a return action is 2 or more, it is not possible to specify the returner. The integrated processing unit 67 determines NO in ACT 574 and proceeds to ACT 575. The integrated processing unit 67 outputs voice data of a returner error to the voice synthesis unit 66, as ACT 575. As a result, the voice synthesis unit 66 synthesizes a voice indicating the returner error. Then, the speaker 5 outputs a voice, for example, "The returner was not able to be specified". Then, the integrated processing unit 67 ends the return process.

As such, the integrated processing unit 67 executes the return process for the return action of the consumer to specify one consumer in the purchase area 112 as the returner who returned the commodity to the shelf 10. Then, the integrated processing unit 67 checks whether the consumer specified as the returner purchased the commodity returned to the shelf, that is, the returned commodity. When the consumer purchased the returned commodity, that is, when the difference value R obtained by subtracting the returned quantity P from the purchased quantity Q is 0 or more, the integrated processing unit 67 transmits a return notification command including the member ID of the consumer specified as the returner, and the data of the returned commodity to the sales management device 7.

On the other hand, when the consumer did not purchase the returned commodity, that is, when the difference value R obtained by subtracting the returned quantity P from the purchased quantity Q becomes negative, the integrated processing unit 67 notifies a return mistake error.

Next, the operation of the sales management device 7 that received the return notification command will be described with reference to FIG. 21. The sales management device 7 acquires the member ID from the return notification command, as ACT 711. As ACT 712, the sales management device 7 generates returned commodity data based on the commodity data included in the returned commodity notification command, that is, the commodity code, commodity name, unit price, and returned quantity P. The returned commodity data is obtained by replacing the purchased quantity in the purchased commodity data with the returned quantity P.

As ACT 713, the sales management device 7 selects the purchased commodity data whose commodity code matches the returned commodity data, from the purchase list 71 in which the member ID acquired in the process of ACT 701 is set. Then, as ACT 714, the sales management device 7 subtracts the returned quantity P of the returned commodity data from the purchased quantity of the selected purchased commodity data. Thus, the sales management device 7 ends the operation of the procedure shown in the flowchart of FIG. 21.

As described above, when the sales management device 7 receives a return notification command from the integrated processing unit 67, the purchased quantity of the purchased commodity data related to the returned commodity in the purchase list 71 in which the member ID included in the return notification command is set is reduced by the returned quantity P.

When the return action of the commodity is recognized and the consumer who performed the return action is specified, the integrated processing unit 67 outputs a return notification command for subtracting the data of the commodity from the purchase list 71 of the consumer, to the sales management device 7. However, when the data of the purchase list 71 becomes an abnormal value by subtracting the data of the commodity from the purchase list 71, the integrated processing unit 67 does not output a return notification command. The integrated processing unit 67 executes the process at the time of abnormality.

Specifically, when the difference value R between the purchased quantity Q and the returned quantity P is negative, that is, the purchased quantity after subtracting the returned quantity P becomes negative, the data in the purchase list 71 becomes an abnormal value. When the integrated processing unit 67 determines YES in ACT 610, the integrated processing unit 67 executes the process of ACT 606. That is, the integrated processing unit 67 executes the process of notifying the mistake in return location as the process at the time of abnormality.

Next, the operation of the integrated processing unit 67 to which the exit notification command was input will be described using the flowchart of FIG. 19.

The integrated processing unit 67 acquires the tracking ID from the exit notification command, as ACT 621. The integrated processing unit 67 searches the correlation table 69 and checks whether the member ID is correlated with the tracking ID, as ACT 622. If the member ID is not correlated, the consumer managed by the tracking ID is a consumer who left the store without performing personal authentication. Therefore, the integrated processing unit 67 determines NO in ACT 622 and ends the process.

If the member ID is correlated with the tracking ID, the integrated processing unit 67 determines YES in ACT 622 and proceeds to ACT 623. The integrated processing unit 67 acquires the member ID correlated with the tracking ID, as ACT 623. Then, the integrated processing unit 67 outputs a settlement permission notification command to the sales management device 7, as ACT 624. The payment permission notification command includes the member ID acquired in the process of ACT 623. Hereby, the integrated processing unit 67 ends the operation of the procedure shown in the flowchart of FIG. 19.

As such, when the exit notification command is input, the integrated processing unit 67 determines that a settlement instruction was issued. Then, the integrated processing unit 67 outputs a settlement permission notification to the sales management device 7.

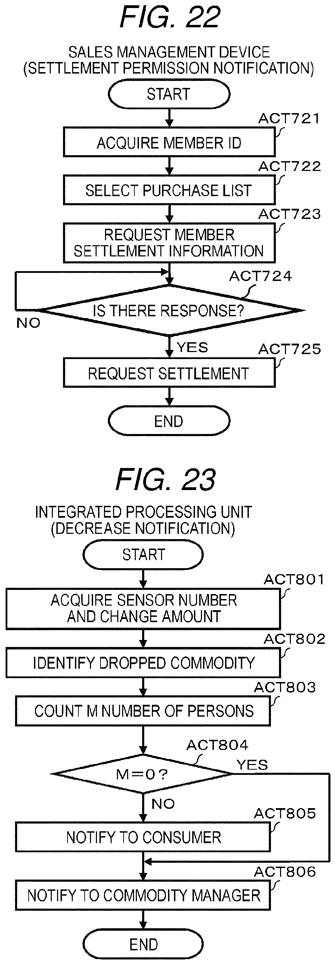

FIG. 22 is a flowchart showing the operation of the sales management device 7 which received a settlement permission notification command. The sales management device 7 acquires the member ID from the settlement permission notification command, as ACT 721. The sales management device 7 selects the purchase list 71 in which the member ID is set, as ACT 722. The sales management device 7 requests the member server 8 for the information related to the settlement registered by the consumer identified by the member ID, as ACT 723.

In response to the request, the member server 8 searches the member database 81, acquires the information related to the settlement registered by the consumer, and responds to the sales management device 7.

The sales management device 7 waits for a response of information related to settlement, as ACT 724. When the member server 8 responds to the settlement information, the sales management device 7 determines YES in ACT 724 and proceeds to ACT 725. The sales management device 7 outputs the purchased commodity data registered in the purchase list 71 to the settlement server 9 together with information related to the settlement, thereby requesting the settlement, as ACT 725. In response to the request, the settlement server 9 executes the settlement process. For example, if the information related to the settlement is information related to the credit card settlement, the credit card settlement process is executed. For example, if the information related to settlement is information necessary for electronic settlement using a barcode, a two-dimensional code, or the like, the settlement process by the electronic settlement is executed. Hereby, the sales management device 7 ends the process for the settlement permission notification command.

By the way, the example in which the commodity is unexpectedly moved from the display place does not necessarily result from a consumer taking out a commodity from the shelf 10 or returning a commodity to the shelf 10. In some cases, a commodity may naturally drop from the shelf 10 due to wind, an earthquake, or the like. In such a case, the action monitoring processing unit 65 does not output a hand-reaching notification command, and the commodity monitoring processing unit 64 suddenly outputs a decrease notification command. The decrease notification command includes the sensor number set in the commodity monitoring sensor 1 in the section in which the dropped commodity is displayed and the weight change amount due to the drop of the commodity. The weight change amount matches the unit weight of the dropped commodity.

Then, next, the operation procedure of the integrated processing unit 67 when a decrease notification command is suddenly input without a hand-reaching notification command being input will be described using the flowchart of FIG. 23.

When a decrease notification command is input, the integrated processing unit 67 starts the process of the procedure shown in the flowchart of FIG. 23. First, the integrated processing unit 67 acquires the sensor number and the weight change amount included in the decrease notification command, as ACT 801. As ACT 802, the integrated processing unit 67 identifies the dropped commodity in the same manner as the process of ACT 543 described above. As ACT 803, the integrated processing unit 67 counts the number M of consumers in the purchase area 112 in the same manner as the process of ACT 561 described above.

The integrated processing unit 67 checks whether the number M of persons is 0, as ACT 804. If the number M of persons is not 0, that is, if there are consumers in the purchase area 112, the integrated processing unit 67 determines NO in ACT 804 and proceeds to ACT 805. As ACT 805, the integrated processing unit 67 outputs voice data for notifying the consumer of a caution associated with the drop of the commodity to the voice synthesis unit 66, in the same manner as the process of ACT 546 described above. As a result, the voice synthesis unit 66 synthesizes a voice for notifying the consumer of a caution correlated with the drop of the commodity. Then, the speaker 5 outputs a voice, for example, "Commodity D was dropped. Do not touch the dropped Commodity D". Here, the commodity D is the commodity name of the commodity specified in ACT 802.

As ACT 806, the integrated processing unit 67 outputs, to the monitoring terminal AT, notification data for notifying the commodity manager of the work associated with the drop of the commodity, in the same manner as the process of ACT 547 described above. As a result, the monitoring terminal AT outputs a message instructing to immediately go to collect the commodity D because the commodity D was dropped, for example, by display and voice.

On the other hand, when the number M of consumers in the purchase area 112 is 0, the integrated processing unit 67 determines YES in ACT 804, skips the process of ACT 805, and proceeds to ACT 806. Therefore, the monitoring terminal AT outputs a message instructing to immediately go to collect the commodity D because the commodity D was dropped, for example, by display and voice. No voice is output from the speaker 5 to the consumer to notify a caution associated with the drop of the commodity.

With the above, the integrated processing unit 67 ends the process of the procedure shown in the flowchart of FIG. 23.

The explanation of the operation of the store system 100 is finished.

Here, the integrated processing unit 67 cooperates with the commodity monitoring processing unit 64 to form a first detection unit. That is, the integrated processing unit 67 detects the movement of a commodity from the section of the shelf 10 which is the display place to the outside of the display place by the decrease notification command from the commodity monitoring processing unit 64.

The integrated processing unit 67 cooperates with the commodity monitoring processing unit 64 and the action monitoring processing unit 65 to form a second detection unit. That is, the integrated processing unit 67 detects that a person (consumer) took out a commodity from the inside of the display place to the outside of the display place, by the hand-reaching notification command and the hand-return notification command from the action monitoring processing unit 65 and the decrease notification command from the commodity monitoring processing unit 64.

The integrated processing unit 67 constitutes a notification unit by executing the processes of ACT 541 to ACT 547 of FIG. 15. That is, when the movement of a commodity was detected but the take-out of the commodity whose movement was detected is not detected, the integrated processing unit 67 notifies a designated notification destination. Here, one of the notification destinations is the speaker 5 connected to the voice synthesis unit 66. The speaker 5 is an example of a notification device. The speaker 5 outputs a voice informing the consumer that the commodity was dropped and that the dropped commodity should not be touched. Therefore, since the consumer does not return the dropped commodity, there is no inconsistency between the commodity actually purchased by the consumer and the commodity recognized by the system as the purchased item by the consumer.

Another one of the notification destinations is the monitoring terminal AT connected via the communication network NW. The monitoring terminal AT is also an example of the notification device. The monitoring terminal AT outputs a message for instructing the commodity manager to immediately go to collect the commodity because the commodity was dropped, for example, by display and voice. Therefore, the commodity manager immediately starts collecting the dropped commodity, and the dropped commodity is not left for a long time. As a result, there is no inconsistency between the commodity actually purchased by the consumer and the commodity recognized by the system as the purchased item of the consumer, which is caused by the consumer returning the dropped commodity to the shelf 10.

The integrated processing unit 67 cooperates with the tracking processing unit 62 to form a confirmation unit. That is, the integrated processing unit 67 checks whether there is a person near the shelf 10 where the movement of the commodity is detected by the processes of ACT 803 and ACT 804 in FIG. 23. Then, when there is a person near the shelf 10, the voice synthesis unit 66 is controlled to cause the speaker 5 to output a voice informing the consumer that the commodity was dropped and that the dropped commodity should not be touched. Therefore, it is possible to notify the consumer who does not make a purchase action or a return action that the dropped commodity should not be touched, and thus, the above-mentioned inconsistency can be surely prevented.

If there is no person near the shelf 10, no voice is output from the speaker 5, and thus, there is an advantage that unnecessary voice output can be avoided.

If the consumer SA tries to take out the commodity C from the section 203 and another commodity C drops from the same section 203, then the purchase process is performed as if the consumer SA purchased two of the commodity C. However, no voice is output from the speaker 5 to warn of the drop of the commodity and the consumer returns the unintended extra one of the commodity C to the original section 203. Here, since the return process is executed for this return action, the number of commodities C purchased by the consumer becomes " 1" to reflect the return of the extra commodity C. That is, the inconsistency between the commodities actually being purchased by the consumer SA and the commodities recognized as being purchased by the system is resolved.

A modification of the embodiment will be described.

In the present embodiment, the sensor number and the weight change amount are shown as the information acquired in ACT 542 or ACT 552 in FIG. 15. Accordingly, in ACT 543 or ACT 553, the commodity can be specified by only the sensor number, and thus the weight change amount may be omitted. When only the drop of the commodity is notified and the type of the commodity does not have to be specified, the processes of ACT 542, ACT 543, ACT 552, and ACT 553 in FIG. 15 can be omitted.

In the case of a store where the commodity manager can immediately collect the dropped commodity, the monitoring terminal AT may be the only notification destination for notifying that the commodity was dropped. On the other hand, in the case of a store where the commodity manager cannot immediately collect the dropped commodity, the speaker 5 may be the only notification destination and the speaker 5 may repeatedly emit a warning voice.

The case where a commodity is unexpectedly moved from the display place is not limited to the drop of a commodity. For example, a commodity that easily rolls, such as a ball, may roll and move from its original section to an adjacent section. In such an example, after a decrease notification command is output from the commodity monitoring sensor 1 in the original section, an increase notification command is output from the commodity monitoring sensor 1 in the adjacent section. Then, the absolute values of the weight change amounts included in the notification commands are equal. Therefore, when the integrated processing unit 67 detects such an event, the processes of ACT 801 to ACT 806 in FIG. 23 may be executed.

The tracking processing unit 62 analyzes the image data captured from the tracking sensors 21 and 22 and tracks the movement of the consumer in the tracking area 111. The tracking processing unit 62 may track the movement of the consumer based on the information from the receiver that received the beacon transmitted from the transmitter carried by the consumer.

The personal authentication processing unit 63 may authenticate the consumer by biometric authentication. Here, the personal authentication devices 41 and 42 are devices that read biometric information such as a face, an iris, or a fingerprint.

The commodity monitoring processing unit 64 may monitor the movement of the commodity from the image captured by the camera. Here, it is possible to detect that the commodity was returned to the incorrect place based on the similarity between the commodity image captured by the camera and the preset commodity image.

The commodity monitoring sensor 1 may detect an increase or decrease in the number of displayed commodities. Here, when the quantity data from the commodity monitoring sensor 1 decreases, the commodity monitoring processing unit 64 recognizes that a commodity was taken out from the section where the commodity monitoring sensor 1 is provided. When the quantity data from the commodity monitoring sensor 1 increases, the commodity monitoring processing unit 64 recognizes that a commodity is placed in the section where the commodity monitoring sensor 1 is provided.

An image processing unit may be adopted instead of the voice synthesis unit 66 and the notification may be performed by displaying an image. Alternatively, the notification may be performed by using a voice and an image together.

In the present embodiment, the case where the integrated processing unit 67 executes the processing of the procedure shown in the flowchart of FIG. 19 in response to the exit notification command was illustrated. Accordingly, when the integrated processing unit 67 receives a settlement notification command including a member ID from the POS terminal connected to the communication network, the integrated processing unit 67 may execute the processes after ACT 632 in FIG. 19.

The shelf control device 6 is not limited to the configuration shown in FIG. 3. For example, a first computer device including the tracking processing unit 62, the personal authentication processing unit 63, the commodity monitoring processing unit 64, and the action monitoring processing unit 65 may be connected to a second computer device including the integrated processing unit 67 and the voice synthesis unit 66 by the communication network to form the shelf control device 6. Alternatively, the first computer device may be further subdivided, or the voice synthesis unit 66 may be excluded from the second computer device.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. A commodity management device, comprising:
a first sensor configured to detect a movement of a commodity from a display region;
a second sensor configured to detect a removal of a commodity from of the display region to outside of the display region by a person; and
a controller configured to notify a designated notification destination when the movement of the commodity from the display region is detected by the first sensor but the removal of the commodity from the display region to outside the display region by a person has not been detected.

2. The commodity management device according to claim 1, wherein the notification destination is a notification device near the display region where the movement of the commodity was detected by the first sensor.

3. The commodity management device according to claim 1, wherein the notification destination is a notification device in a waiting place of a commodity manager away from the display region.

4. The commodity management device according to 1, wherein the notification destination is a first notification device near the display region where the movement of the commodity was detected by the first sensor and a second notification device in a waiting place of a commodity manager away from the display region.

5. The commodity management device according to claim 4, wherein the controller is further configured to check whether a person is near the display region when the movement of the commodity is detected, send a notification to the first notification device if a person is near the display region, and
the first notification device is configured to output a message, upon receiving the notification, that the commodity should not be touched.

6. The commodity management device according to claim 4 or 5, wherein the first notification device is a speaker.

7. The commodity manage device according to claim 4 or 5, wherein the first notification device is a display screen.

8. The commodity management device according to any one of claims 1 to 7, wherein the first sensor is a weight scale configured to weigh changes in weight of items on the display region.

9. The commodity management device according to any one of claims 1 to 8, wherein the second sensor comprises a camera.

10. The commodity management device according to any one of claims 1 to 8, wherein the second sensor comprises a time of flight camera.

11. The commodity management device according to any one of claims 1 to 10, wherein the display region is a portion of a display shelf.

12. The commodity management device according to any one of claims 1 to 11, wherein the notification destination is a speaker proximate to the display region.

13. A commodity management system, comprising:
a notification device; and
the commodity management device according to any one of claims 1 to 12 configured as a display shelf having a display region on which a commodity is to be displayed.

14. A commodity management method, comprising:
detecting a movement of a commodity from a display region based on output from a first sensor;
detecting a removal of a commodity from of the display region to outside of the display region by a person based on output of a second sensor; and
notifying a designated notification destination when the movement of the commodity from the display region is detected but the removal of the commodity from the display region to outside the display region by a person has not been detected.

15. The commodity management method according to claim 14, wherein the notification destination is a speaker configured to output a voice message.
